# EUROPEAN PATENT APPLICATION

(11) **EP 1 393 998 A1**
(43) Date of publication of application: **03.03.2004**
(21) Application number: 02733394.7
(22) Date of filing: 07.06.2002
(51) Int. Cl.: B60R 21/22

(54) **SIDE AIR BAG DEVICE**

(30) Priority: 08.06.2001 JP 2001174097; 29.08.2001 JP 2001259606; 12.09.2001 JP 2001276905; 09.10.2001 JP 2001311385; 13.12.2001 JP 2001380307; 20.12.2001 JP 2001387470
(71) Applicant: Toyoda Gosei Co., Ltd., Nishikasugai-gun, Aichi-ken 452-8564 (JP)
(72) Inventor: TANASE, Toshinori, TOYODA GOSEI CO., LTD., Nishikasugai-gun, Aichi 452-8564 (JP); MIZUNO, Yoshio, TOYODA GOSEI CO., LTD., Nishikasugai-gun, Aichi 452-8564 (JP); KOYAMA, Toru, TOYODA GOSEI CO., LTD., Nishikasugai-gun, Aichi 452-8564 (JP)
(74) Representative: Leson, Thomas Johannes Alois, Dipl.-Ing.
(86) International application number: PCT/JP2002/005661
(87) International publication number: WO 2002/100691

(57) **Abstract**

A side airbag device (10) for protecting an occupant (P) from a side impact applied to a body (15). The inside of the airbag (18) is divided into an upper chamber and a lower chamber. A connecting portion (24) is formed by joining the inside surfaces of the airbag. The flow of the inflation gas is distributed to the upper chamber and the lower chamber by the connecting portion.

## Description

### TECHNICAL FIELD

The present invention relates to a side airbag device for protecting occupants from impact by operating when, for example, an impact greater than a predetermined impact is applied to the body of a vehicle or the like, and more specifically, relates to a side airbag for protecting occupants from impact from a side wall of the body.

### BACKGROUND ART

Fig. 1 shows a first prior art side airbag device 102 described in Japanese Laid-Open Patent Publication No. 10-67297. The side airbag device 102 is disposed on the side of a seat.cushion 101. An airbag 103 is divided into an upper airbag 103a and a lower airbag 103b by a partition 104. When the airbag 103 is inflated, the lower airbag 103b is arranged beside the hip region Ph of the occupant P. A pressure restricting valve 105 is installed in the partition 104. The lower airbag 103b is inflated before the upper. airbag 103a by means of the partition 104 and the pressure restricting valve 105. Since an inflation gas from an inflator is supplied to the upper airbag 103a only through the pressure restricting valve 105, the inflation of the upper airbag 103a is relatively slow.

There has been an increase in the number of vehicles, such as minivans and off-road vehicles, that have bumpers mounted at a relatively high position. When such vehicles crash into the side of another vehicle, an impact is applied at a relatively high position of the side door of the struck vehicle and first deforms that position. Therefore, when the inflation of the upper airbag 103a is delayed, the impact may not be sufficiently absorbed.

Fig. 2 shows a second prior art side airbag device 112 described in Japanese Laid-Open Patent Publication No. 2000-177527. The side airbag device 112 has a housing 116 embedded in a seat back. An inflator 115 is accommodated in the housing 116. An airbag 113 has an upper chamber 113a and a lower chamber 113b. The upper chamber 113a is completely separated from the lower chamber 113b by a partitioning seam 114. When the airbag 113 is inflated, the upper chamber 113a is arranged beside the chest region of the occupant, and the lower chamber 113b is arranged beside the hip region Ph of the occupant. Furthermore, the airbag 113 is inflated so that the internal pressure of the upper chamber 113a is lower than the internal pressure of the lower chamber 113b.

More specifically, the housing 116 has upper and lower apertures 116a and 116b, the inflator 115 supplies the upper chamber 113a with inflation gas through the upper aperture 116a, and supplies the lower chamber 113b with inflation gas through the lower aperture 116b. The difference in the internal pressures of the chambers 113a and 113b is regulated by the difference in the cross sectional areas of the apertures 116a and 116b. If the lower aperture 116b is larger than the upper aperture 116a, the inflation gas fills the lower chamber 113b before the upper chamber 113a. In this way, an internal pressure difference is generated between the chambers 113a and 113b.

Since the upper chamber 113a and the lower chamber 113b are inflated simultaneously, it is possible to absorb the impact applied at a relatively high position on the side door. However, when an impact is received at a relatively low position on the side door, the lower part of the side door is deformed and enters the lower chamber 113b. The lower chamber 113b is separated from the upper chamber 113a. Thus, when the side door compresses the lower chamber 113b, the gas in the lower chamber 113b cannot be released. This may excessively increase the internal pressure of the lower chamber 113b, which becomes excessively high, and the applied impact may not be sufficiently absorbed.

Furthermore, the shape of the seat, the sitting posture of the occupant, and the inner shape of the side door differs between vehicles. The size of the apertures 116a and 116b must be changed in accordance with the type of the vehicle to optimize the internal pressure difference between the two chambers 113a and 113b. Therefore, in addition to the airbag 113, the housing 116 must also be prepared in accordance with the vehicle type. This increases the manufacturing cost.

In addition, the partitioning seam 114 extends linearly in the horizontal direction. Thus, when the airbag 113 is inflated and deployed, the airbag 113 easily contracts in the vertical direction. This destabilizes the shape of the airbag 113 and may cause differences in the impact absorbing capability of the airbag 113.

### DISCLOSURE OF THE INVENTION

It is an object of the present invention to provide an inexpensive side airbag device that effectively absorbs an impact regardless of the position at which the impact is applied.

To achieve the above object, a first aspect of the present invention provides a side airbag device including an inflator for generating an inflation gas when an impact greater than a predetermined impact is applied to the body, an airbag which is inflated and deployed by the inflation gas, a partitioning means provided in the airbag for dividing the airbag into at least an upper chamber and a lower chamber, and a flow restricting means provided in the airbag for distributing the flow of the inflation gas to the upper chamber and the lower chamber.

In one aspect, the side airbag device is mounted on the seat back of a seat disposed within a vehicle. The airbag is desirably accommodated in the seat back, and deployment of the airbag is permitted by breaking part of the seat back.

In one aspect, a means for facilitating the breaking of the seat is provided in part of the seat back which accommodates the lower chamber of the airbag. It is desirable that the break facilitating means is formed of a relatively nonstretchable material.

In one aspect, the partitioning means further includes a rear passage connecting the upper chamber and the lower chamber in the rear of the airbag, and part of the partitioning means also functions as the flow restricting means.

In one aspect, the rear end of the flow restricting means is disposed in front of the seat back and part of the back flow passage is disposed in front of the seat back when the airbag is deployed. It is desirable that the flow restricting means has a portion extending vertically.

In one aspect, the flow restricting means distributes more inflation gas to the lower chamber than the upper chamber.

It is desirable that the airbag be provided with a means for maintaining the pressure of the upper chamber below a predetermined pressure. In one aspect, the means for maintaining pressure is a vent mechanism. The vent mechanism may be a variable vent mechanism.

It is desirable that the airbag has a thickness restricting means for restricting the thickness of the airbag. In one aspect, the thickness restricting means releases the restriction of the thickness when the pressure of the airbag reaches a predetermined pressure and also functions as the means for maintaining pressure.

It is desirable that the aperture cross sectional area at the lower end of the rear passage is greater than the aperture cross sectional area at the top end.

In one aspect, the partitioning means includes a front partitioning means disposed in front of the flow restricting means.

In one aspect, the partitioning means includes a front portion connected to the flow restricting means.

It is desirable that the airbag has a front passage connecting the upper chamber and the lower chamber at the front of the front portion.

In one aspect, the front portion is formed so as to extend vertically in the front part of the airbag.

The partitioning means is a connecting portion formed in a U-shape, V-shape, H-shape, W-shape, or horizontal T-shape.

In one aspect, the lower chamber has a relatively flat bottom portion.

In one aspect, when the side airbag device is in a standby state, the airbag is folded, such that the front part of the main part adjacent to the abdominal region of the occupant and the front part of the lower portion corresponding to the hip region of the occupant are folded back to the front end of the partitioning means, and the airbag is connected to an inflator when the lower portion is folded back to the lower end of the partitioning means.

It is desirable that the thickness of the main part of the airbag is less than the thicknesses of the upper chamber and the lower chamber. When the airbag is inflated, the main part is disposed at the height of an armrest of the vehicle door, and in one aspect, the thickness of the lower chamber is greater than that of the upper chamber.

In one aspect, the thickness restricting means is a connecting portion connecting inner surfaces of the airbag.

In one aspect, the airbag includes an outer bag and an inner covering disposed inside the outer bag, and the flow restricting means is the inner bag, and the flow restricting means has a connecting hole for inflation gas to flow to the upper chamber.

When the airbag is inflated, the upper chamber is disposed at the height of the chest of the occupant, and the lower chamber is disposed at the height of the hip of the occupant. In one aspect, the lower chamber is disposed beside a thigh of the occupant and the side surface of the seating portion of the seat.

### BRIEF DESCRIPTION OF THE DRAWINGS

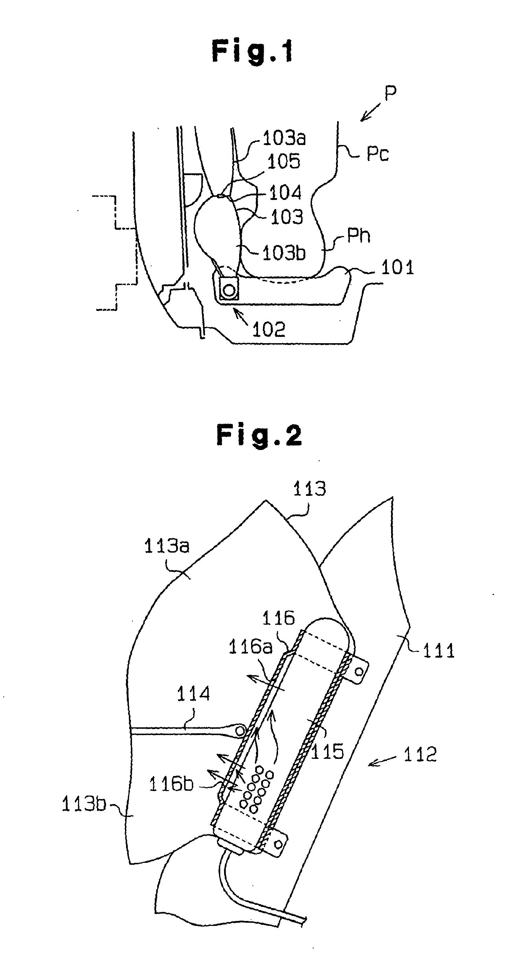

Fig. 1 is a schematic diagram showing a first prior art side airbag device;
Fig. 2 is a partial schematic diagram showing a second prior art side airbag device;
Fig. 3 is a side view showing a side airbag device according to a first embodiment of the present invention;
Fig. 4 is a cross sectional view taken along line 4-4 in Fig. 3;
Fig. 5 is a cross sectional view taken along line 5-5 in Fig. 3;
Fig. 6 is a graph showing the pressure change of the upper chamber and the lower chamber during inflation;
Figs. 7A and Fig. 7B are side views showing another example of an airbag;
Fig. 8 is a side view of a side airbag device according to a second embodiment of the present invention;
Fig. 9A and Fig. 9B are front views showing another airbag of the second embodiment in an inflated state;
Fig. 10A and Fig. 10B are front views showing another airbag of the second embodiment in an inflated state;
Fig. 11A and 11B show modifications of Fig. 8;
Fig. 12 is a side view of an airbag device according to a third embodiment of the present invention;
Fig. 13 is a cross sectional view taken along line 13-13 in Fig. 12;
Fig. 14 is a cross sectional view taken along line 14-14 in Fig. 12;
Fig. 15 is a side view showing a side airbag device according to a fourth embodiment of the present invention in an inflated state;
Fig. 16 is a front view showing the side airbag device of Fig. 15;
Fig. 17 is a plan view showing the bottom surface of the airbag of Fig. 15;
Fig. 18 is a cross sectional view showing a lower portion of the airbag of Fig. 15;
Fig. 19 is a front view showing a prior art side airbag in an inflated state;
Fig. 20 is a side view showing a seat provided with a side airbag device according to a fifth embodiment of the present invention;
Fig. 21 is a side view showing a seat with the airbag in an inflated state;
Fig. 22 is a cross sectional view taken along line 22-22 in Fig. 20;
Fig. 23 is a cross sectional view taken along line 23-23 in Fig. 20;
Fig. 24 is a side view showing a seat provided with a side airbag device according to a sixth embodiment of the present invention;
Fig. 25 is a cross sectional view showing a seat provided with a side airbag device according to a seventh embodiment of the present invention;
Fig. 26 is a partial cross sectional view showing a seat provided with a side airbag device according to an eighth embodiment of the present invention;
Fig. 27 is a cross sectional view showing a seat provided with a side airbag device according to a ninth embodiment of the present invention;
Fig. 28 is a side view of a seat provided with the side airbag device according to a tenth embodiment of the present invention;
Fig. 29 is a side view of a seat provided with a side airbag device according to an eleventh embodiment of the present invention;
Fig. 30 is a cross sectional view taken along line 30-30 in Fig. 29;
Fig. 31 is an enlarged cross sectional view taken along line 31-31 line in Fig. 29;
Fig. 32A, Fig. 32B, Fig. 32C, and Fig. 32D illustrate the procedures for folding the airbag;
Fig. 33 is a side view showing an airbag device according to a twelfth embodiment of the present invention;
Fig. 34 is a cross sectional view showing the airbag according to a thirteenth embodiment of the present invention; and
Fig. 35 is a side view showing the airbag of Fig. 34 before inflation is completed.

### BEST MODE FOR CARRYING OUT THE INVENTION

A side airbag device 10 according to a first embodiment of the present invention for protecting an occupant from impact applied to the side of a vehicle will now be discussed.

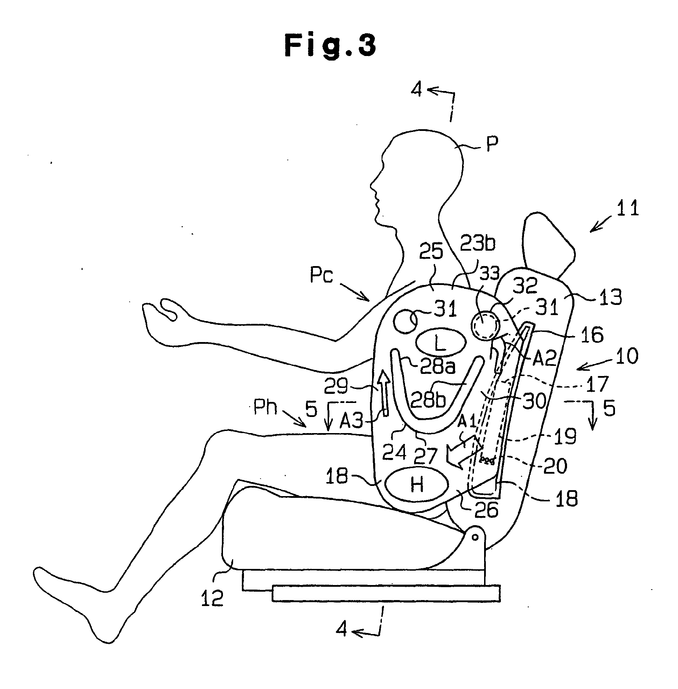

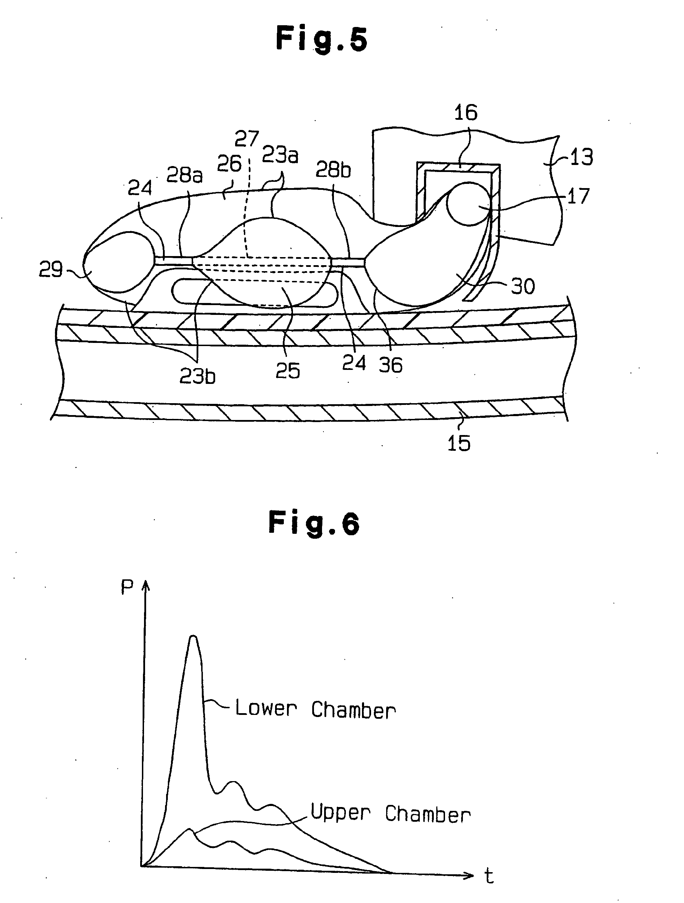

Fig. 3 shows a seat 11 viewed from the door side of the vehicle. The seat 11 has a seating portion 12 and a seat back 13. As shown in Figs. 3 and 5, the side airbag device 10 is embedded in the side of the seat back 13.

The side airbag device 10 has an inflator 17 for generating inflation gas and an airbag 18 installed so as to cover the inflator 17. A case 19 of the inflator 17 is fixed to a frame (not shown in the drawings) of the seat back 13. The inflation gas for inflating the airbag 18 is sealed in the case 19. A plurality of gas discharge ports (nozzles) 20 for discharging the inflation gas are formed in the lower portion of the case 19.

A sensor (not shown in the drawings) is connected to the inflator 17 for detecting an impact applied to the side of the body. When an impact greater than a predetermined impact is detected, a control circuit (not shown in the drawings) provides an activation signal to the side airbag device 10. The inflator 17 discharges inflation gas into the airbag 18 in response to the activation signal. This inflates and deploys the airbag 18 as indicated by the solid line in Fig. 3.

The airbag 18 is formed by sewing together two pieces of base fabrics (occupant side base fabric 23a and body side base fabric 23b) that have undergone a fire-retardant treatment. When the side airbag device 10 is not being activated, that is, in a standby state, the airbag 18 is folded as indicated by the double-dashed line in Fig. 3, so as to be accommodated within the case 19.

As shown in Figs. 3 through 5, a generally U-shaped connecting portion 24 is formed in the central part of the airbag 18. The connecting portion 24 serves as a partitioning means, a flow restricting means, a contraction suppressing means, and part of a pressure difference setting means. The connecting portion 24 is formed by sewing together the occupant side base fabric 23a and the body side base fabric 23b. Accordingly, the base fabrics 23a and 23b are not separated from each other at the connecting portion 24 even when gas is supplied into the airbag 18.

The connecting portion 24 partitions the airbag 18 into an upper partitioned chamber (upper chamber) and a lower partitioned chamber (lower chamber) 26. When the airbag 18 is inflated, the upper chamber 25 is adjacent to the chest region Pc of an occupant P seated on the seat 11, and the lower chamber 26 is adjacent to the hip region Ph of the same occupant P.

The connecting portion 24 has a horizontal section 27, or a horizontal restricting section, formed so as to extend from the front to the rear of the airbag 18 when the airbag 18 is inflated, and a front vertical section 28a and a rear vertical section 28b respectively formed so as to extend toward the top of the airbag 18 from the two ends of the horizontal section 27. The horizontal section 27 is located at a higher position than the gas discharge nozzle 20 of the inflator 17. The front vertical section 28a functions as a front restricting member and a front partitioning section, and the rear vertical section 28b functions as a rear restricting member and a rear partitioning section. The vertical sections 28a and 28b do not necessarily have to be vertical as long as they extend in the upward direction of the airbag 18. Furthermore, the horizontal section 27 does not necessarily have to be horizontal as long as it extends from the front to the rear of the airbag 18.

A front passage 29 is defined between the front vertical section 28a and the front edge of the airbag 18. A rear passage 30 is defined between the rear vertical section 28b and the rear inner surface of the airbag 18. The front passage 29 and rear passage 30 directly connect the upper chamber 25 to the lower chamber 26. The cross sectional areas of the openings formed by the front and rear passages 29 and 30 are gradually reduced from the bottom end toward the top end. Accordingly, the front and rear passages 29 and 30 are so-called throttling passages. The front passage 29 and the rear passage 30 function as a connecting means and part of the pressure difference setting means.

A front vent hole 31 for discharging gas is formed in the top of the body side base fabric 23b. It is preferred that the vent hole 31 be formed at a position that is farthest from the gas discharge nozzle 20 substantially along an extension of the front passage 29.

In the upper portion of the body side base fabric 23b above the rear vertical section 28b, a variable vent mechanism 32 is formed to discharge gas. It is preferred that the variable vent mechanism 32 be located substantially along an extension of the rear passage 30. The variable vent mechanism 32 includes a rear vent hole 31 and a cover fabric 33 sewn so as to cover the rear vent hole 31. The cover fabric 33 is sewn to the body side base fabric 23b so that it opens the rear vent hole 31 when the pressure in the upper chamber 25 exceeds a predetermined pressure. The front vent hole 31 and the variable vent mechanism 32 operate as a means for maintaining the pressure in the upper chamber at a predetermined pressure or lower.

As shown in Fig. 5, when the airbag 18 is inflated, the horizontal section 27 is located at about the same height as an armrest 15a protruding inward from the inner side of a door 15. In other words, when the airbag 18 is inflated, the upper chamber 25 is disposed above the armrest 15a, and the lower chamber 26 is disposed below the armrest 15a. The armrest 15a is accommodated in a concavity 36 defined by the upper chamber 25, the lower chamber 26, and the two passages 29 and 30.

The operation of the side airbag device 10 will now be discussed.

When the sensor detects an impact greater than the predetermined impact, the control circuit provides the activation signal to the inflator 17. The inflator 17 instantaneously discharges the inflation gas sealed in the case 19 from the gas discharge nozzle 20 into the airbag 18 so as to inflate the airbag 18.

In the airbag 18, the flow of the inflation gas is divided into two by the horizontal section 27 and rear vertical section 28b. As indicated by arrow A1 in Fig. 3, one flow of the inflation gas is directed toward the lower chamber 26 along the horizontal section 27. As indicated by arrow A2, the other flow of the inflation gas is directed toward the upper chamber 25 along the rear vertical section 28b. As indicated by arrow A3, part of the gas supplied to the lower chamber 26 flows along the front vertical section 28a toward the upper chamber 25. The gas that reaches the upper chamber 25 is discharged out of the airbag 18 through the vent hole 31 in predetermined amounts.

Since the rear passage 30 and the front passage 29 are throttling passages, the amount of gas flowing toward the upper chamber 25 is less than the amount flowing toward the lower chamber 26, the internal pressure of the lower chamber 26 is relatively high, and the internal pressure of the upper chamber 25 is relatively low. That is, an internal pressure difference occurs between the upper chamber 25 and the lower chamber 26. The pressure of the upper chamber 25 and the lower chamber 26 changes as shown in the graph of Fig. 6. It is apparent from this graph that the internal pressure difference is continuous over a predetermined period of time.

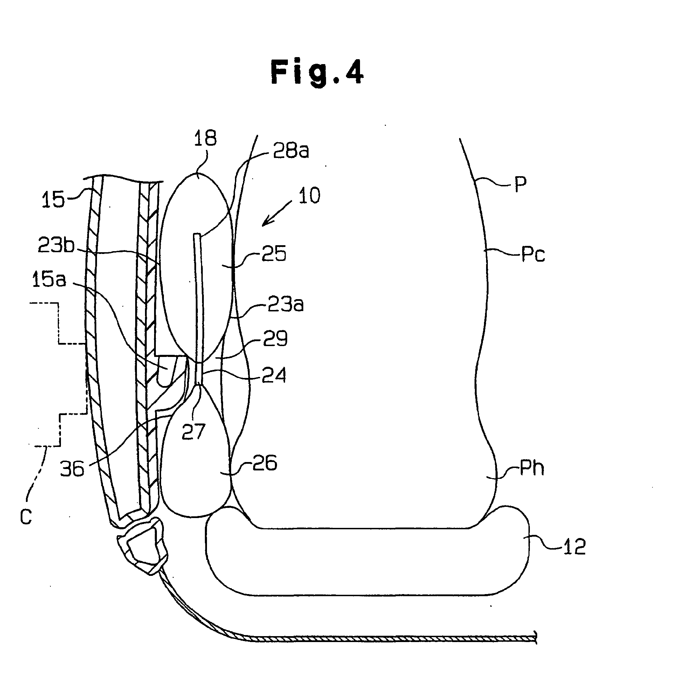

As shown in Fig. 4, when a vehicle C crashes into the door 15, the impact deforms the lower portion of the door 15 and compresses the lower chamber 26. The compression causes the gas in the lower chamber 26 to flow through both passages 29 and 30 to the upper chamber 25. This prevents the internal pressure in the lower chamber 26 from increasing excessively. When the pressure in the upper chamber 25 rises and exceeds a predetermined pressure, the vent hole 31 of the variable vent mechanism 32 opens, and part of the gas of the upper chamber 25 is discharged. In this way, the internal pressure of the upper chamber 25 is prevented from becoming excessively high.

The side airbag device 10 of the first embodiment has the following advantages.
(1) The connecting portion 24 partitions the airbag 18 into the upper chamber 25 and the lower chamber 26 and forms the front passage 29 and the rear passage 30 that connect the upper chamber 25 and the lower chamber 26. Furthermore, the connecting portion 24 regulates the gas flow direction such that the gas supplied from the inflator 17 is supplied at about the same time to the upper chamber 25 and the lower chamber 26. Therefore, the upper chamber 25 and the lower chamber 26 are inflated without any delays. Since the upper chamber 25 and the lower chamber 26 are connected to each other by the passages 29 and 30, when either one of the chambers 25 and 26 is compressed by an intruding object such that the internal pressure of the chamber is excessively increased, the gas is released into the other one of the chambers 25 and 26 through the passages 29 and 30. Thus, the airbag 18 effectively absorbs the impact regardless of the position at which the impact is applied.
(2) The inflation gas is supplied at about the same time to the upper chamber 25 and the lower chamber 26 by the connecting portion 24, which is formed with relative ease. Since special parts are unnecessary, the side airbag device 10 has a simple structure and is inexpensive to manufacture.
(3) The airbag 18 has a connecting portion 24 including the horizontal section 27, which extends generally horizontally, and the front vertical section 28a and rear vertical section 28b, which extend vertically from the horizontal section 27. Therefore, the gas supplied from the inflator 17 is respectively distributed to the upper chamber 25 and the lower chamber 26 through the rear vertical section 28b and the horizontal section 27. Furthermore, the horizontal section 27 and the two vertical sections 28a and 28b guide the flow of the inflation gas smoothly to the upper chamber 25 and the lower chamber 26. In this manner, the connecting portion 24 stabilizes the gas flow within the airbag 18.
(4) Since the connecting portion 24 is U-shaped, gas may be retained in the part circumscribed by the occupant side base fabric 23a and the body side base fabric 23b. In this manner, inadvertent fluctuation of the internal pressure of the upper chamber 25 is prevented when the airbag 18 is inflated and deployed.
(5) The front and rear vertical sections 28a and 28b suppress vertical contraction of the inflated airbag 18. Therefore, the airbag 18 effectively absorbs an impact because the inflated airbag 18 has a stable shape.
(6) The connecting portion 24 defines the front and rear passages 29 and 30 so as to produce a predetermined pressure difference between the upper chamber 25 and lower chamber 26. Therefore, the difference in the internal pressures of the upper chamber 25 and the lower chamber 26 is set at a desired value in accordance with the shape of the connecting portion 24.
(7) In general, desirable airbag 18 characteristics include a relatively strong constraining force of the lower chamber 26, which protects the hip region Ph of the occupant P, and a constraining force of the upper chamber 25, which protects the chest region Pc of the occupant P and which is relatively weak compared to the lower chamber 26. The side airbag device 10 is set so that the internal pressure of the lower chamber 26 is higher than the internal pressure of the upper chamber 25 when the airbag 18 is fully inflated and deployed. Therefore, the airbag 18 has desirable characteristics.
(8) A front vent hole 31 is arranged in the upper chamber 25 at a position where the gas discharge nozzle 20 is generally farthest from the inflator 17. Since the position of the front vent hole 31 is optimized, the inflation of the entire airbag 18 is ensured.
(9) When, for example, the lower chamber 26 is compressed by an intruding object, the internal pressure of the lower chamber 26 is excessively increased. In this case, the gas of the lower chamber 26 may flow through the front and rear passages 29 and 30 into the upper chamber 25 and suddenly increase the internal pressure of the upper chamber 25. When the internal pressure of the upper chamber 25 exceeds a predetermined pressure, the gas in the upper chamber 25 is discharged out of the variable vent mechanism 32. Therefore, the internal pressure of upper chamber 25 is prevented from increasing excessively.
(10) The connecting portion 24 functions as the partitioning means for partitioning the upper chamber 25 and the lower chamber 26, the pressure setting means for setting the pressure difference between the upper chamber 25 and the lower chamber 26, the flow restricting means for restricting the direction of the gas flowing in the airbag 18, and a contraction suppressing means for suppressing vertical contraction of the inflated airbag 18. Therefore, the airbag 18 is significantly simple.
(11) The airbag 18 is formed by the occupant side base fabric 23a and the body side base fabric 23b. The connecting portion 24 is formed by connecting part of the two base fabrics 23a and 23b. The connecting portion 24 having a plurality of functions is formed, for example, by the relatively simple process of sewing together the two base fabrics 23a and 23b. Accordingly, the manufacturing of the airbag 18 is simple.
(12) The front and rear passages 29 and 30 are formed by the base fabrics 23a and 23b and the vertical sections 28a and 28b. Since the cross sectional areas of the openings at the bottom end of the front and rear passages 29 and 30 are larger than those at the top end, the internal pressure difference between the upper chamber 25 and the lower chamber 26 is maintained for a relatively long time.
(13) The connecting portion 24 has a substantially U-like shape. Therefore, the front and rear passages 29 and 30 connecting the upper chamber 25 and the lower chamber 26 and serving as throttling passages are easily manufactured.
(14) The gas discharge nozzles 20 of the inflator 17 are disposed below the horizontal section 27. Therefore, the internal pressure of the lower chamber 26 is ideally suited to be higher than the upper chamber 25.
(15) The armrest 15a formed on the door 15 is accommodated in the concavity 36 of the inflated airbag 18. Therefore, since the armrest 15a does not readily interfere with the airbag 18, the deployment of the airbag 18 is unimpaired in the forward direction, and the gas flow from the lower chamber 26 to the upper chamber 25 is unhindered. In particular, delay in the inflation of the airbag 18 in the forward direction and excessive pressure rise in the lower chamber 26 are suppressed.

The side airbag device of the first embodiment may be modified as described below.

Although the airbag 18 is formed by sewing together the occupant side base fabric 23a and the body side base fabric 23b, the airbag 18 may also be formed, for example, from a single layer woven fabric through bag weaving.

Although the airbag 18 is formed by sewing together the occupant side base fabric 23a and the body side base fabric 23b, the connecting portion 24 may be formed by attaching together the occupant side base fabric 23a and the body side base fabric 23b using, for example, adhesion, fusion bond, or a fastener.

Instead of the U-shape configuration, the connecting portion 24 also may be formed to have, for example, a flexed U-shape, a V-shape, a W-shape, an L-shape, an inverted U-shape, an inverted flexible U-shape, an inverted V-shape, an inverted W-shape, an inverted L-shape, a horizontal U-shape, a horizontal flexed U-shape, a horizontal V-shape, a horizontal W-shape, or a horizontal L-shape.

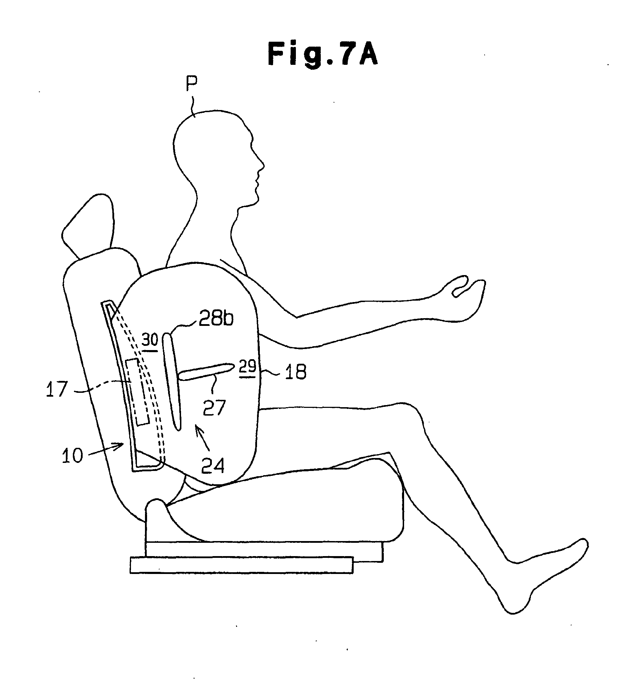

Furthermore, the connecting portion 24 may also have a horizontal T-shape, as shown in Fig. 7A. More specifically, the connecting portion 24 may be formed to include the rear vertical section 28b facing the inflator 17 and the horizontal section 27 connected to the rear vertical section 28b. In this case, the rear vertical section 28b functions as the flow restricting means, and the horizontal section 27 operates as the flow restricting means and the partitioning means. The upper chamber 25 and the lower chamber 26 are connected by the front passage 29 in front of the horizontal section 27.

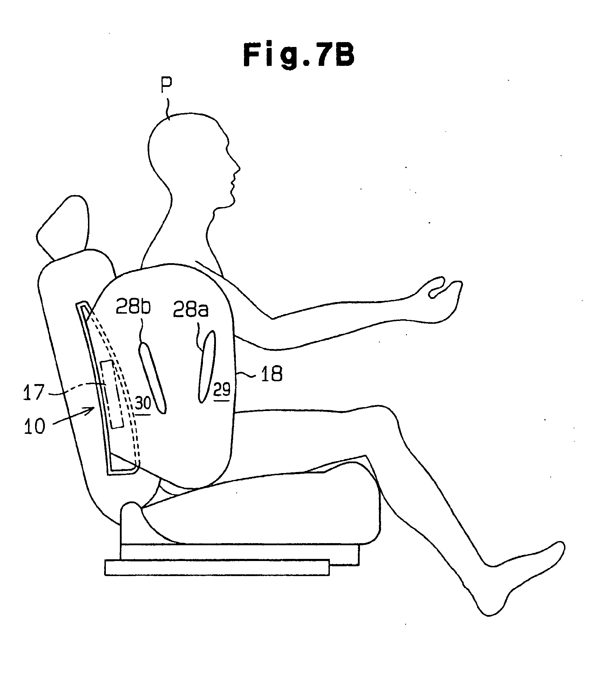

Furthermore, the horizontal section 27 may be eliminated, as shown in Fig. 7B. In this case, the connecting portion 24 is formed by the rear vertical section 28b facing the inflator 17 and the front vertical section 28a arranged in the front portion of the inflator 17. In this case, the rear vertical section 28b functions as the flow restricting means and part of the partitioning means, and the front vertical section 28a functions as part of the partitioning means. The upper chamber 25 is defined above the front vertical section 28a, and the lower chamber 26 is defined below the front vertical section 28a. The upper chamber 25 and the lower chamber 26 are connected at least by the front passage 29.

Although the airbag 18 is divided into two chambers, the upper chamber 25 and the lower chamber 26, by the connecting portion 24, the airbag 18 may be vertically divided, for example, into three or more chambers.

Although the cross sectional area of the opening at the front and rear passages 29 and 30 are formed so as to gradually decrease from the bottom end toward the top end, the opening cross sectional area may, for example, decrease in a stepped manner. Alternatively, the opening cross sectional area may be constant.

The vent hole 31 or the variable vent mechanism 32 may be eliminated. Further, there may be a plurality of vent holes 31 or a plurality of variable vent mechanisms 32.

In place of the variable vent mechanism 32, the sewn portion may be such that the stitches of the occupant side base fabric 23a and the body side base fabric 23b are released when the pressure in the upper chamber 25 exceeds a predetermined pressure.

Another connecting portion for restricting the flow direction of the inflation gas may be formed near the gas discharge nozzle 20 in the airbag 18.

A means for restricting vertical contraction of the airbag 18 may be provided separately from the connecting portion 24. For example, the vertical contraction of the airbag 18 may be restricted by connecting the occupant side base fabric 23a and the body side base fabric 23b with a tether or the like, such that the upper chamber 25 and the lower chamber 26 are not inflated to a predetermined thickness or greater during inflation.

The airbag 18 also may be formed, for example, from a non-woven fabric, a synthetic resin film, or the like.

In addition to being installed for the driver seat 11, the airbag device 10 may also be installed for the passenger seat and rear seats, such as a second row seat, a third row seat, and the like.

The second through twelfth embodiments of the present invention will now be described focusing on aspects that differ from the first embodiment. The first through twelfth embodiments may be combined with one another if necessary.

First, the side airbag device 10 of a second embodiment of the present invention is described below.

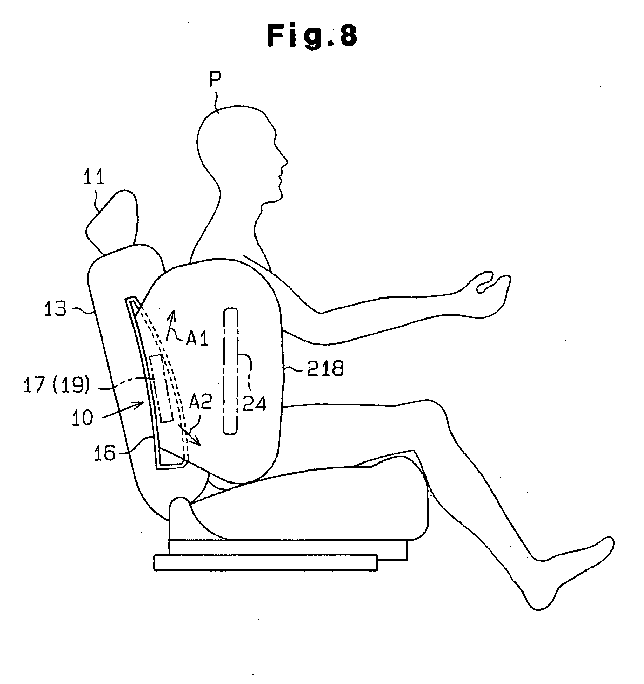

As shown in Fig. 8, the side airbag device 10 includes an airbag 218 having a connecting portion 24 formed so as to be disposed along the upper body of an occupant P sitting in the seat 11 when the airbag 218 is inflated. The connecting portion 24 restricts the thickness of the airbag 218 in the lateral direction of the vehicle, thus making contraction of the inflated airbag 218 difficult in the lengthwise direction of the connecting portion 24.

The inflator 17 is provided in the lower portion of the seat back 13 of the seat 11 so as to substantially extend parallel to the surface of the seat back. In the case 19 of the inflator 17, discharge nozzles are formed to discharge inflation gas generated within the case 19 into the airbag 218.

The inflator 17 discharges inflation gas upward in the direction indicated by arrow A1 and downward in the direction indicated by arrow A2. Specifically, the arrow A1 is directed toward between the top end of the connecting portion 24 and the top edge of the airbag 218, and the arrow A2 is directed toward between the bottom end of the connecting portion 24 and the bottom edge of the airbag 218.

The side airbag device 10 of the second embodiment has the advantages described below.
(1) The connecting portion 24 makes it difficult for the airbag 218 to contract along the longitudinal direction of the connecting portion 24. Accordingly, the airbag 218 need not be large-scaled, the dimensions of the airbag 218 can be readily ensured in a direction along the upper body of an occupant P, thereby stably maintaining precision in protecting the occupant P when the bag is inflated.
(2) Since the inflation gas is discharged between the top end and bottom end of the connecting portion 24 and the internal edge of the airbag 218, the airbag 218 expands smoothly.
(3) Since the connecting portion 24 is formed so as to be substantially parallel to the inflator 17, and since the inflator 17 discharges inflation gas upward in the arrow A1 direction and downward in the arrow A2 direction, the discharge directions of the inflation gas suitably avoid being directed toward the connecting portion 24, and the entire airbag 218 is rapidly inflated and deployed.
(4) Since the inflator 17 is provided in the lower portion of the seat back 13, the lower portion of the airbag 218 corresponding to the height of the hip region Ph of the occupant P is inflated first.

The second embodiment also may be modified as described below.

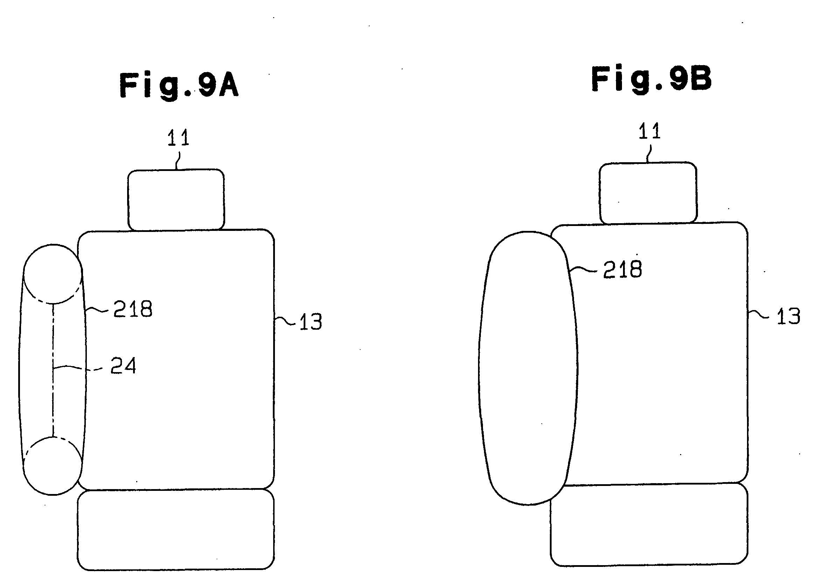

The connecting portion 24 also may be formed so as to release the bond of the interior surface of the airbag 218 when the internal pressure of the airbag 218 increases and exceeds a predetermined pressure. In this case, the airbag 218 is inflated, as shown in Fig. 9A, and the expansion is restricted in the lateral direction of the vehicle by the connecting portion 24. In this way, the airbag 218 expands and deploys in a narrow space between the body side wall and the seat 11, such that satisfactory inflation is ensured. When the internal pressure exceeds a predetermined pressure, the restriction of the thickness by the connecting portion 24 is released, and the airbag 218 is again inflated, as shown in Fig. 9B. The hardness of the airbag 218 is maintained at the same degree as during initial inflation, thereby suitably protecting the occupant P through the increased volume of the airbag 218. Accordingly, the connecting portion 24 operates as a pressure maintaining means and a thickness restricting means.

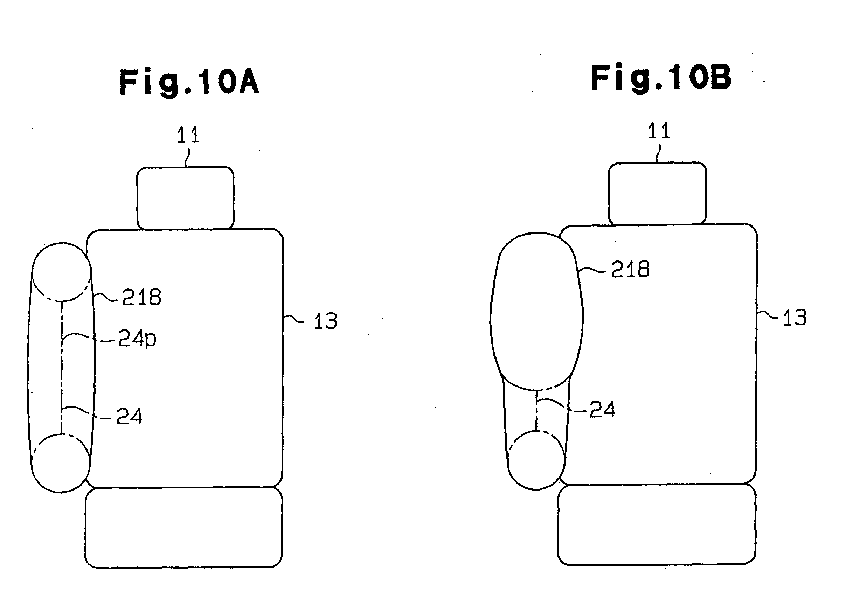

As shown in Fig. 10A, a separating portion 24p that releases the bonding of the inner surfaces of the airbag 218 and a connecting portion 24 that does not release the bonding of the inner surfaces of the airbag 218 may be formed. The separating portion 24p is preferably formed at a position corresponding to the height of the chest region Pc of the occupant P.

The airbag 218 is inflated until the internal pressure reaches a predetermined pressure, as shown in Fig. 10A. When the internal pressure of the airbag 218 exceeds a predetermined pressure, the restriction of the thickness by the separating portion 24p is released, and the restriction of the thickness by the connecting portion 24 is maintained. In this way, the volume of the airbag 218 is enlarged, and the internal pressure of the part corresponding to the height of the chest region Pc of the occupant P is prevented from increasing excessively. Since the airbag 218 is prevented from oppressing the chest region Pc of the occupant P, the occupant P is protected in a further preferable manner. Accordingly, the connecting portion 24 operates as a thickness restricting means, and the separating portion 24p operates as a thickness restricting means and a pressure maintaining means.

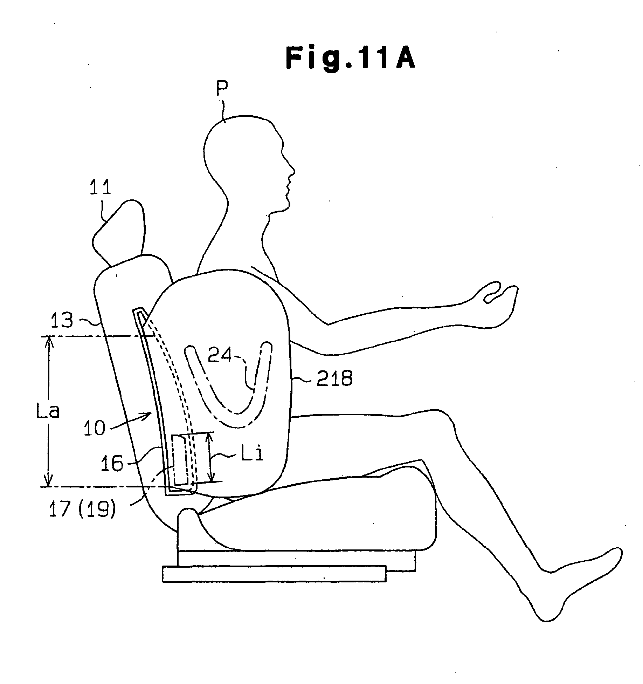

It is preferable that the bottom end of the inflator 17 is at approximately the same height as the bottom end of the permissible range of mounting the airbag 218, as shown in Fig. 11A. In this way, the bottom portion of the airbag 218 corresponding to the height of the hip region Ph of the occupant P is inflated first with greater reliability. It is more preferable that the bottom end of the inflator 17 is at a height approximately equal to the seat surface. Since the inflator 17 is provided at the lowest part of the seat back 13, i.e., at the height of the hip region Ph of the occupant P, the bottom portion of the airbag 218 rapidly expands so as to become adjacent to the hip region Ph of the occupant P. Since the upper portion of the airbag 218 inflates to a degree allowing movement of the chest region Pc at the moment the lower portion of the airbag 218 has inflated to a degree allowing movement of the hip region Ph of the occupant P, the airbag 218 simultaneously moves the chest region Pc and the hip region Ph of the occupant P in a direction away from the body 15. The length Li of the inflator 17 is, for example, 185 mm, and the length La of the mounting range of the airbag 218 is, for example, 500 mm.

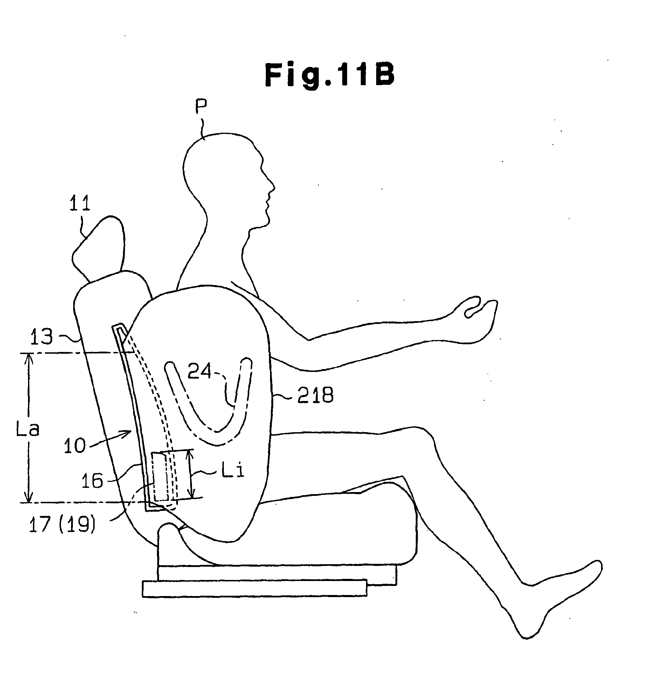

The inflator 17 of Fig. 11B is fixed to the seat 11 such that the bottom end of the inflator 17 is higher than the bottom end of the airbag 218 and at approximately the same height as the seat surface 15b. In this case, the bottom of the airbag 218 is inflated first more reliably, and the airbag 218 moves the chest region Pc and the hip region Ph of the occupant P at about the same time.

A plurality of connecting portions 24 may also be formed in the airbag 218.

The connecting portion 24 need not be formed so as to extend along the upper body of the occupant P. The shape of the connecting portion 24 is not limited insofar as the difference in the height of the top end and the height of the bottom end of the connecting portion 24 does not exceed a predetermined value. In such a case, the vertical contraction of the airbag 218 is suppressed because the connecting portion 24 generates a contraction so as to compress the airbag 218 front-to-back.

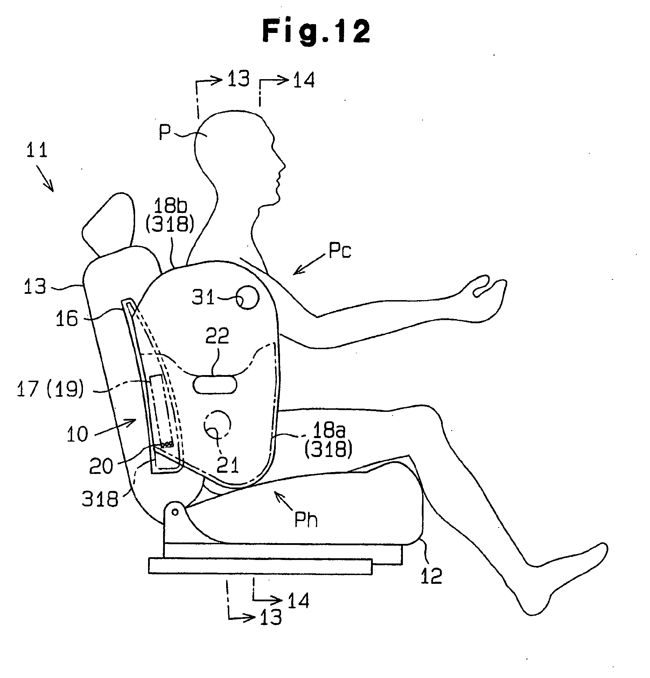

A side airbag device 10 according to a third embodiment of the present invention will now be described below with reference to Figs. 12 through 14.

As shown in Fig. 12, the side airbag device 10 has an inflator 17 and an airbag 318 equipped with the inflator 17 so as to cover the inflator 17.

The case 19 of the inflator 17 is fixed to a frame (not shown) of the seat back 13 by a cover 16. Inflation gas for inflating the airbag 318 is sealed inside the inflator 17. A plurality of gas discharge nozzles 20 for discharging the inflation gas are provided in the lower portion of the case 19.

The airbag 318 has a double structure of an internal bag 18a for covering the inflator 17 and an external bag 18b for covering the entire internal bag 18a. The internal bag 18a defines a lower chamber and an upper chamber is defined between the external bag 18b and the internal bag 18a. The internal bag 18a and the external bag 18b each may be formed, for example, by machine sewing two layers of woven fabric that have undergone a fire-retardant treatment.

The airbag 318 inflates and deploys between the inner surface of the body 15 and an occupant P sitting in the seat 11. The external bag 18b is inflated so as to be adjacent from the chest region Pc to the hip region Ph of the occupant P, as indicated by the solid line in Fig. 12. The internal bag 18a is inflated at the height of the hip region Ph of the occupant P within the external bag 18b, as indicated by the dashed line in Fig. 12.

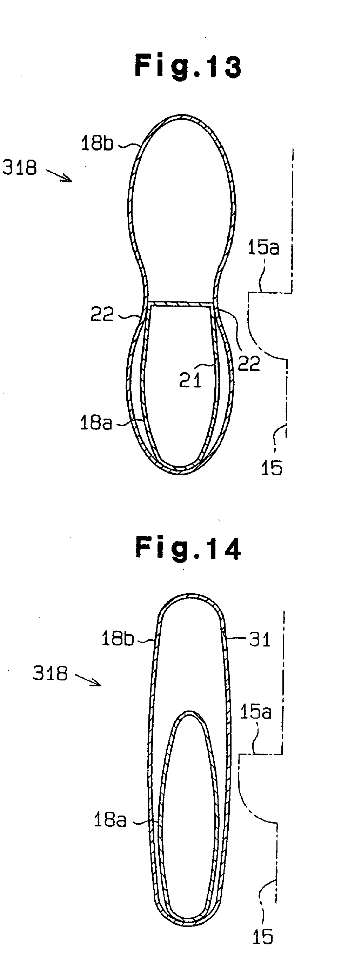

The internal bag 18a and the external bag 18b are housed by the cover 16 in a folded condition when the side airbag device 10 is in a standby state. The internal bag 18a and the external bag 18b are connected by a connecting portion 22. As shown in Fig. 13, the top of the internal bag 18a operates as the connecting portion 22. The connecting portion 22 is preferably formed in part of the interior surface of the body 15, i.e., at the height of the armrest 15a.

As shown in Fig. 12, the connecting portion 22 is formed near the center of the airbag 318. In this way, a concavity is formed in the center of the external bag 18b, as shown in Fig. 13. In other words, the thickness of the main portion of the airbag 318 is less than that at the upper portion and lower portion. The connecting portion 22 functions as part of a partitioning means and as a thickness restricting means.

The vehicle side of the internal bag 18a has a connecting hole 21 connecting the inner and outer side of the internal bag 18a. The inflation gas is supplied through the connecting hole 21 from the internal bag 18a to the external bag 18b. The connecting hole 21 is a means for permitting gas flow between the lower chamber and the upper chamber.

A vent hole 31 for connecting the inner and outer side of the external bag 18b is formed in the external bag 18b. The inflation gas is discharged from the external bag 18b through the vent hole 31.

The operation of the side airbag device 10 is described below.

When an impact on the body 15 exceeding a predetermined impact is detected, the inflation gas is instantly discharged from the gas discharge nozzles 20 into the airbag 318, and the airbag 318 begins to inflate. Specifically, first, inflation gas is supplied to the internal bag 18a, and the internal bag 18a inflates rapidly. Since the internal bag 18a is connected to the external bag 18b by the connecting portion 22, the external bag 18b is rapidly deployed from the bottom side of the connecting portion 22 as the internal bag 18a inflates. Accordingly, the lower portion of the airbag 319 is deployed first.

The inflation gas within the internal bag 18a gradually flows through the connecting hole 21 into the external bag 18b. The inflation gas flow rate is very low because the internal pressure of the internal bag 18a is low when the internal bag 18a starts to inflate. Then, the inflation gas flow rate gradually increases as the internal pressure of the internal bag 18a increases. In this way, the external bag 18b is inflated and deployed by the inflation gas leaking from the internal bag 18a. Accordingly, inflation gas is supplied to the external bag 18b after the lower portion of the airbag 318 is completely inflated.

The inflation gas that reaches the external bag 18b is expelled through the vent hole 31. The aperture area of the vent hole 31, the aperture area of the connecting hole 21, and the amount of inflation gas discharged from the inflator 17 are set so as to respectively inflate and deploy the internal bag 18a and external bag 18b at a desired deployment speed and internal pressure.

If the body 15 is deformed by a side impact such that the body 15 reaches the external bag 18b, the external bag 18b is compressed and moves toward the occupant P. In this state, the inflation gas flows through the connecting hole 21 between the internal bag 18a and the external bag 18b.

If the body 15 is deformed such that the deformed portion reaches the internal bag 18a, the external bag 18b is pressed against the internal bag 18a by the deformed portion. This closes the connecting hole 21 of the internal bag 18a with the base fabric of the external bag 18b, i.e., the flow controlling means and connecting hole blocking means. Since the flow rate of the inflation gas passing through the connecting hole 21 is suppressed, the inflation state of the internal bag 18a does not change much.

The side airbag device of the third embodiment has the following advantages.
(1) The airbag 318 has a double structure including an internal bag 18a and the external bag 18b. Since the inflation gas is supplied to the internal bag 18a, the internal bag 18a is rapidly inflated.
(2) When the body 15 is deformed and the body 15 reaches the airbag 318, the flow of the inflation gas is controlled between the internal part and the external part of the internal bag 18a. A large amount of inflation gas within the internal bag 18a does not leak to the external bag 18b even if the deformed body 15 presses the internal bag 18a. Therefore, the inflation state is maintained in a preferable state and the shape of the rapidly inflated internal bag 18a does not change much.
(3) At the moment when the body 15 is deformed and reaches the external bag 18b, the flow of inflation gas from the inside of the internal bag 18a to the inside of the external bag 18b is ensured. When the body 15 is deformed and reaches the internal bag 18a, the flow of the inflation gas is suppressed. Therefore, a change in the deployment state of the external bag 18b is permitted within a range which preferably protects the occupant P. Accordingly, it is possible to rapidly inflate and deploy the entire airbag 318 while preferably protecting the occupant P.
(4) Since the connecting hole 21 formed in the internal bag 18a is selectively closed by the internal surface of the external bag 18b, it is possible to restrict the inflation gas in the airbag 318 and rapidly inflate the airbag 318 with the relatively simple structure of the airbag 318.
(5) Since the connecting hole 21 is formed in the base fabric in the internal bag 18a on the side near the inner surface of the body 15, when the body 15 is deformed and reaches the internal bag 18a, the connecting hole 21 is closed by the internal surface of the external bag 18b. Accordingly, a special supplemental structure is not needed to close the connecting hole 21.
(6) Since the internal bag 18a is connected to the external bag 18b, displacement of the bags 18a and 18b is suppressed.
(7) The connecting portion 22 is formed so as to be at about the same height as the armrest 15a when the airbag 318 is inflated and deployed. Furthermore, the connecting portion 22 forms a concavity in the inflated airbag 318. The distance between the armrest 15a and the external bag 18b is suitably set in accordance with the depth of this concavity. Accordingly, unnecessary interference between the airbag 318 and the armrest 15a is suppressed by the formation of the connecting portion 22, and the airbag 318 is inflated in a preferable manner.
(8) The internal bag 18a is deployed at the height of the hip region Ph of the occupant P. This maintains the airbag 318 in a preferable state even if the body 15 is deformed to the hip region Ph of the occupant P.
(9) The external bag 18b has a vent hole 31. When the internal pressure of the external bag 18b exceeds a predetermined pressure, part of the inflation gas within the external bag 18b is discharged from the vent hole 31. Accordingly, the internal pressure of the external bag 18b, which corresponds to the height of the chest region Pc of the occupant P, does not increase excessively. However, the pressure within the internal bag 18a, which corresponds to the hip region Ph of the occupant P, is maintained at or above a predetermined pressure. Accordingly, the airbag 318 optimally protects the occupant P.
(10) Since the gas discharge nozzles 20 are provided in the lower portion of the inflator 17, the inflation gas is supplied from the inflator 17 to the bottom of the internal bag 18a. Therefore, the inflation gas rapidly fills the inside of the internal bag 18a, which corresponds to the hip region Ph of the occupant P, and the internal bag 18a is more quickly and more reliably inflated and deployed.
(11) The connecting portion 22 is formed in the upper portion of the internal bag 18a. Therefore, the lower portion of the external bag 18b below the connecting portion 22 is rapidly inflated as the internal bag 18a inflates. This completes the expansion of the bottom part of the airbag 318 first. Thereafter, inflation gas is supplied from the internal bag 18a to the external bag 18b through the connecting hole 21. Accordingly, the entire airbag 318 is rapidly and optimally inflated.
(12) Since the margin area of the connecting hole 21 is rapidly deployed, the base fabrics of the bags 18a and 18b are rapidly and more reliably inflated and closely bonded. Accordingly, the connecting hole 21 is optimally closed by the base fabric of the external bag 18b during the initial inflation of the airbag 318.

The side airbag device 10 of the third embodiment may be modified as described below.

The connecting portion 22 need not have to serve as part of the internal airbag 18a. For example, a tether may connect the internal surface of the airbag 18a.

The connecting portion 22 may be formed above or below the connecting hole 21.

The connecting portion 22 need not be formed at the height of the armrest 15a, and the connecting portion 22 may be eliminated.

The inflation gas need not be discharged into the lower portion of the internal bag 18a. For example, The inflation gas may be discharged into the upper portion of the internal bag 18a. In this case, if the connecting hole 21 is provided at the top part of the internal bag 18a, the inflation gas can be rapidly supplied from the internal bag 18a to the external bag 18b so as to rapidly deploy the external bag 18b.

The internal bag 18a need not be deployed at the height of the hip region Ph of the occupant P. For example, if the internal bag 18a is provided in a certain part within the external bag 18b, the specific part can be rapidly inflated. In this case, the deployed shape of the airbag 318 is suitably maintained even when the deformed body 15 reaches the certain part.

The vent hole 31 may be eliminated. In this case, it is preferable that a separate mechanism capable of discharging inflation gas out of the external bag 18b be provided in the external bag 18b.

A plurality of vent holes 31 may be formed in the external bag 18b.

The connecting hole 21 may be closed by a means other than the fabric of the external bag 18b when the deformed body 15 reaches the internal bag 18a.

The connecting hole 21 need not be formed in the internal bag 18a so as to face the body 15. The position of the connecting hole 21 is not limited insofar as the connecting hole 21 is closable. Furthermore, a plurality of connecting holes 21 may be formed in the internal bag 18a. In this case, the inflation gas of the internal bag 18a is rapidly supplied to the entire external bag 18b through the plurality of connecting holes 21 such that the airbag 318 is rapidly inflated. Any amount of the plurality of connecting holes 21 may be kept constantly opened as long as the inflated internal bag 18a is maintained in the preferred shape.

Another means such as a valve may be used instead of the connecting hole 21 as long as inflation gas flow is permitted between the inside of the internal bag 18a and the inside of the external bag 18b.

The flow of the inflation gas between the inside and the outside of the internal bag 18a may be suppressed when the body 15 is deformed reaching the external bag 18b.

A plurality of internal bags 18a may be provided within the external bag 18b. In this case, the connecting hole 21 of a certain internal bag 18a may be closed by the base fabric of an adjacent internal bag 18a or the base fabric of the external bag 18b. The position at which rapid inflation and deployment occurs within the entire the airbag 318 is determined in accordance with the position of the plurality of internal bags 18a within the external bag 18b. Accordingly, freedom of design for the airbag 318 is enhanced.

The inflation gas flow between the inside and the outside of the internal bag 18a may be suppressed when the body is deformed such that it reaches the internal bag 18a. Alternatively, the inflation gas flow between the inside and the outside of the internal bag 18a may be suppressed when the deformed body 15 reaches the internal bag 18a and the amount of deformation of the internal bag 18a exceeds a predetermined range. In this case, the entire airbag 318 is more rapidly inflated and deployed to optimally protect the occupant P.

The side airbag device 10 may be provided, for example, in the seating portion 12 of the seat 11 and in the side wall of the body 15.

A side airbag device 10 according to a fourth' embodiment of the present invention will now be described.

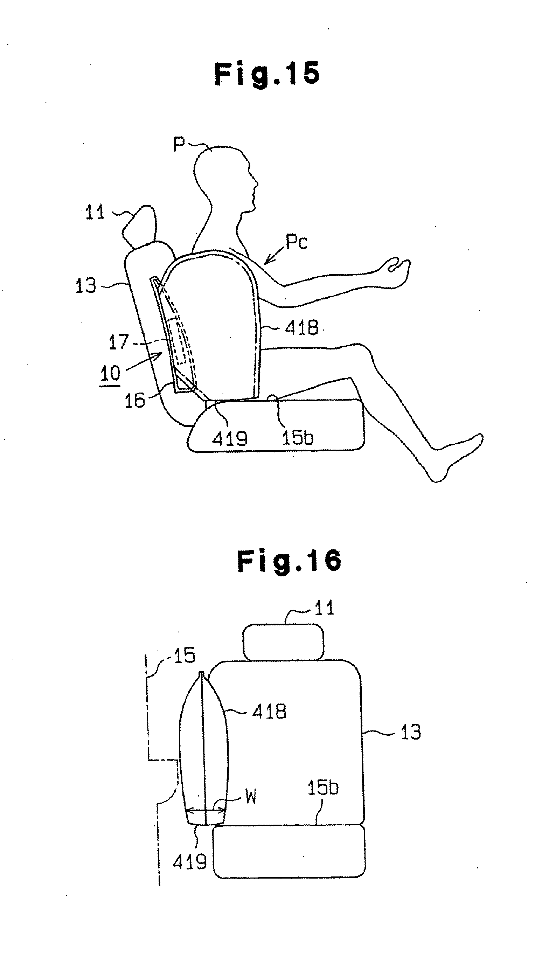

As shown in Fig. 15, the side airbag device 10 of the fourth embodiment includes an airbag 418 having a generally flat bottom portion 419. The airbag 418 is formed by sewing together two sheets of base fabrics.

As shown in Fig. 15 and Fig. 16, the airbag 418 is inflated adjacent to the area from the chest region Pc to the hip region Ph of the occupant P sitting in the seat 11. In other words, the inflated airbag 418 has a bottom portion 419 at a position equal to or higher than the seat surface 15b of the seat 11.

The bottom portion 419 of the airbag 418 is described below.

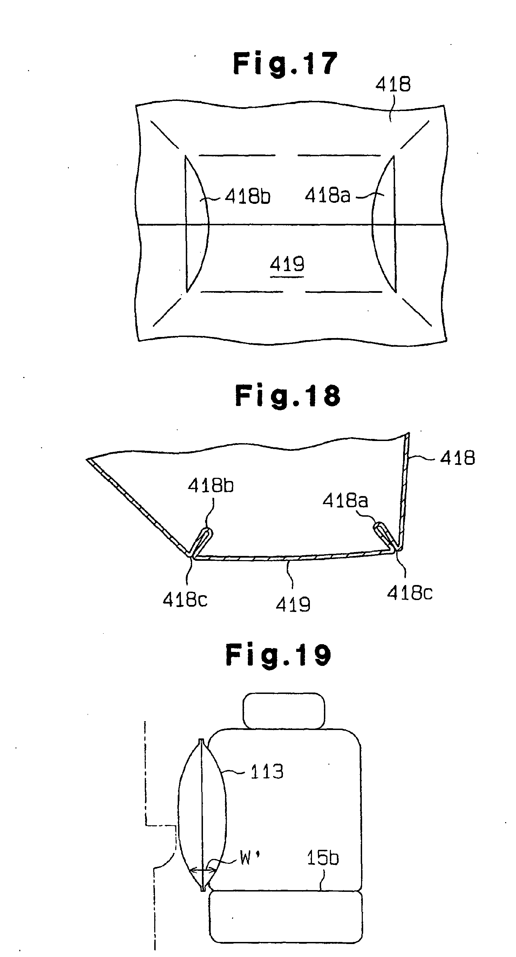

Fig. 17 shows the inner surface of the bottom portion 419 of the airbag 418. Fig. 18 shows a cross section of the bottom portion 419. As shown in Figs. 17 and 18, front and rear tucked portions (tucks) 418a and 418b are formed by tucking the lower portion of the airbag 418. The tucks 418a and 418b extend in the lateral direction of the vehicle at the same height as the seat surface 15b of the seat 11.

The inflated shape of the airbag 418, i.e., the shape extending in a direction parallel to the seat surface 15b, is restricted by a sewing seam 418c forming the tucks 418a and 418b. The bottom portion 419 is formed between the tucks 418a and 418b with a predetermined area so that it widens parallel to the seat surface. The bottom portion 419 may be slightly curved.

The operation of the side airbag device 10 is described below.

When the impact sensor detects an impact exceeding a predetermined impact, a control circuit provides an activation signal to the inflator 17. The inflator 17 discharges inflation gas to the airbag 418 in response to the activation signal. The airbag 418 is instantly inflated by the inflation gas. After inflation of the airbag 418, the bottom portion 419 is disposed approximately at the same height as the seat surface 15b of the seat 11 and substantially parallel to the seat surface 15b. Accordingly, the thickness W of the airbag 418 is adequately ensured even at the height of the seat surface 15b.

The side airbag device 10 of the fourth embodiment has the following advantages.
(1) In the conventional airbag 113 simply formed by sewing together two sheets of fabrics in a planar manner, as shown in Fig. 19, the width W' of the airbag 113 is small at the height of the seat surface 15b. In contrast, the airbag 418 of the fourth embodiment has a bottom portion 419 disposed at substantially the same height as the seat surface 15b of the seat 11 when the airbag 418 is deployed. Therefore, the thickness of the airbag 418 in the lateral direction of the vehicle at the height of the seat surface 15b is increased, and the width W of the airbag 418 adjacent to the hip region Ph of the occupant P is increased compared to the prior art. Accordingly, the occupant P is more optimally protected.
(2) The airbag 418 has a bottom portion 419, which widens approximately parallel to the seat surface 15b of the seat 11 when inflated. The occupant P is optimally protected because the thickness W of the airbag 418 provides adequate protection over a relatively wide range in the vicinity of the seat surface 15b of the seat 11. Since the bottom portion 419 sits on the seat surface 15b even when the airbag 418 is in contact with the seat surface 15b, a predetermined thickness of the deployed airbag 418 is ensured.
(3) The airbag 418 is tacked along a plane substantially parallel to the seat surface 15b of the seat 11 in the generally lateral direction of the vehicle. The bottom portion 419 extending in a direction parallel to the seat surface 15b is formed by the sewing seam 418c. The bottom portion 419 inflates the airbag 418 with the preferred shape.
(4) The bottom portion 419 interposed between the front tuck 418a, rear tuck 418b, and the sewing seam 418c is formed by providing the sewing seam 418c at two locations on the airbag 418. Since the dimensions (surface area) of the bottom portion 419 is restricted by the sewing seam 418c, suitable protection of the hip region Ph of the occupant P is provided over a wider range. Furthermore, the thickness of the airbag 418 is suitably adapted to match the type of vehicle.
(5) since the tucking process is an easy and simple procedure, the airbag 418 provided with the bottom portion 419 is readily manufactured.
(6) Since the bottom portion 419 is disposed at substantially the same height as the seat surface 15b of the seat 11 when the airbag 418 is inflated, the entire airbag 418 is disposed above the seat surface 15b. Therefore, the airbag 418 is rapidly and reliably deployed to a desired deployment shape without being interfered with by the seat 11.

The fourth embodiment may be modified as described below.

When the airbag 418 is inflated, the bottom portion 419 need not be at substantially the same height as the seat surface 15b of the seat 11 and may be positioned slightly higher than the seat surface 15b. In this case, the hip region Ph of the occupant P is also optimally protected.

Although the bottom portion 419 inflates so as to be wider substantially parallel to the seat surface 15b of the seat 11, it is not limited to this arrangement. The inflated shape of the bottom portion 419 may be modified as long as it provides optimal protection for the occupant P.

Although the tucking process is performed at two locations on the ends of the airbag 418 at the lower side of the vehicle, the process may be performed at a single location. A predetermined thickness of the airbag 418 in the lateral direction of the vehicle can be ensured at the area of the tuck and near the area of the tuck by means of this structure.

The tucking process, which extends the sewing seam 418c in the lateral direction of the vehicle, is performed at two locations on the airbag 418 in the longitudinal direction of the vehicle at the lower side of the vehicle. Alternatively, the tucking process, which extends the sewing seam 418c in the lateral direction of the vehicle, may be performed at one location of the airbag 418 in the lateral direction of the vehicle. The bottom portion 419 may be formed in the area between the tuck-processed portions to obtain the advantages of the fourth embodiment.

The tucking process also may be performed at three or more places on the bottom part of the airbag 418.

In the fourth embodiment, the base fabric is subjected to the tucking process such that the tucks 418a and 418b protrude into the airbag 418. Alternatively, the tucking process may be performed such that the base fabric is tucked so that the tucks 418a and 418b protrude outside the airbag 418. In this case, it is desirable that the end of the tucks 418a and 418b are sewn to the base fabric of the airbag 418.

Although the airbag 418 is subjected to a tucking process in the fourth embodiment, the embodiment is not limited to this process; for example, a suitable processing method may be used such as pinching and adhering the inner side of the airbag 418. Essentially, the process may be suitably modified insofar as a predetermined thickness of the airbag 418 is ensured in a shape suitable for an occupant.

Although the bottom portion 419 is formed by subjecting the airbag 418 to a tucking process in the fourth embodiment, the embodiment is not limited to this process. For example, the bottom portion 419 may be formed by cutting out the base fabric of the airbag 418 three-dimensionally beforehand, three-dimensional machine sewing and the like, without using a tucking process.

The bottom portion 419 also may be formed by providing a separate base fabric to form the bottom portion 419.

A side airbag device 10 according to a fifth embodiment of the present invention and a seat 11 are described below.

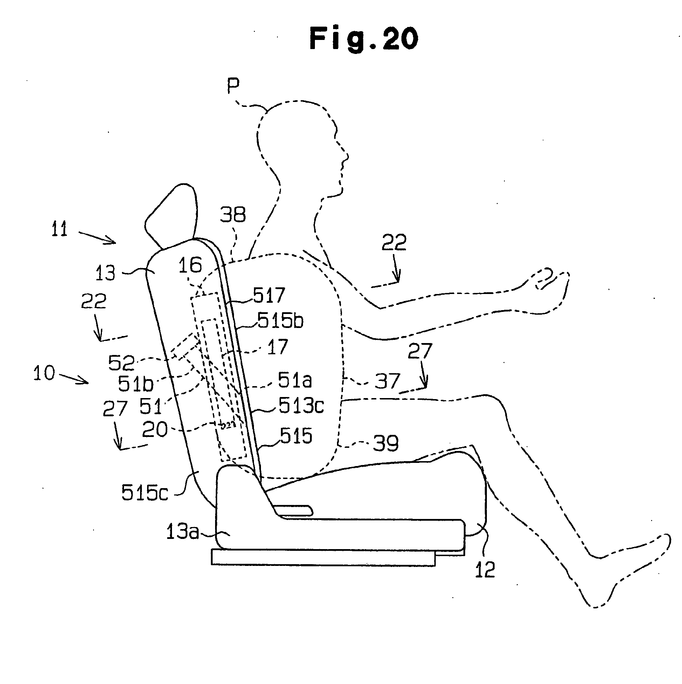

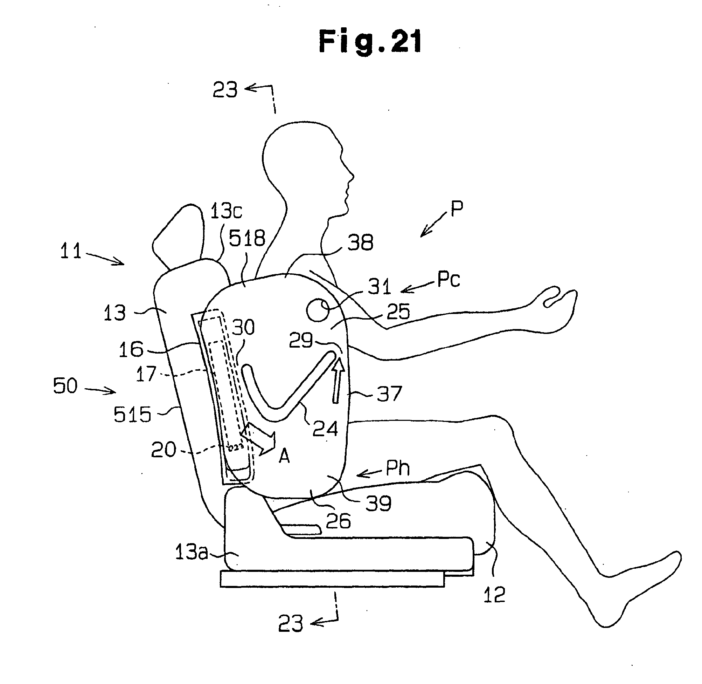

Figs. 20 and 21 show a seat 11 viewed from the door side of the vehicle. The seat 11 has a reclining mechanism for adjusting the angle of the seat back 13 relative to the seating portion 12. The reclining mechanism is covered by a reclining cover 13a. The seat 11 need not have the reclining mechanism and reclining cover 13a, and may be formed with an integrated seat back 13 and headrest 14.

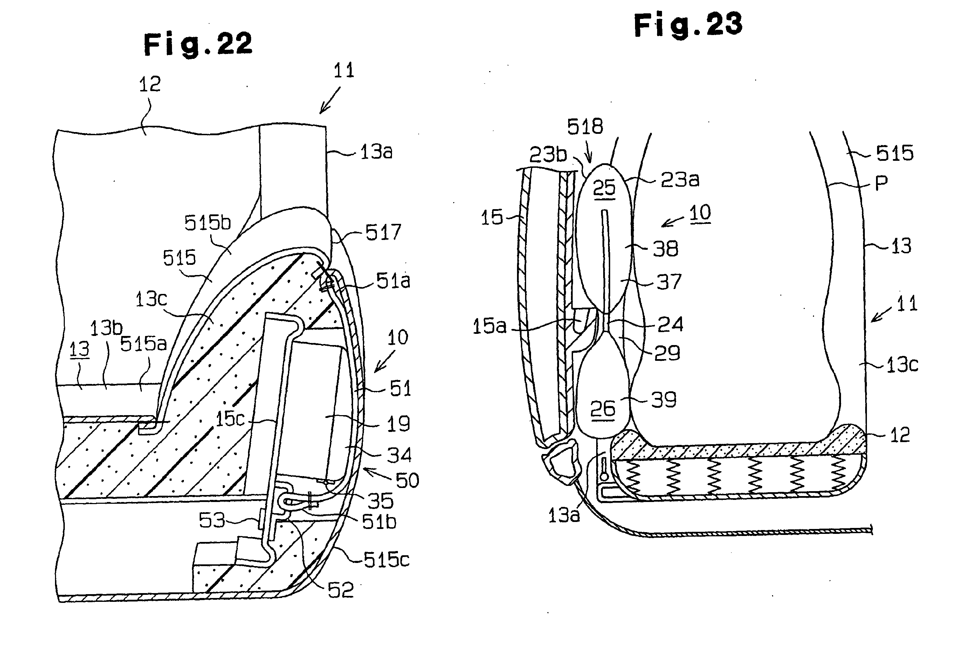

As shown in Fig. 22, the trim cover 515 covering the seat back 13 may be, for example, leather, synthetic leather, monolayer fabric material, or a laminate material formed by one or more layers of a monolayer material, wadding, backing material and the like. The trim cover 515, in its entirety, is not limited to being constructed from a monolayer material or laminate material, and may be constructed in part by a monolayer material, and in part by a laminate material.

The trim cover 515 has a front cover 515a for covering the central portion 13b of the front side of the seat back 13, a shoulder cover 515b for covering the shoulder portions 13c on each side of the central portion 13b, and a back cover 515c for covering the rear surface and side surfaces of the seat back 13. The trim cover 515 is formed by sewing the front cover 515a, shoulder covers 515b, and back cover 515c. The front cover 515a and the shoulder covers 515b may be formed of a single cover material, and the covers 515a through 515c may be a plurality of cover materials.

As shown in Figs. 20 through 23, the side airbag device 10 is built into the seat back 13 and is operated when there is an impact exceeding a predetermined impact on the side of the vehicle. As shown in Fig. 23, the side airbag device 10 is embedded in the side of the seat back 13 near the inside surface of the vehicle body, such as in the door 15.

The side airbag device 10 has an inflator 17 for supplying inflation gas, an airbag 518 installed in the inflator 17 so as to cover the inflator 17, and a main solid body, i.e., case 19, for accommodating the inflator 17 and the airbag 518.

The case 19 is fixed to a side plate 15c, which is part of the frame of the seat back 13, using, for example, a bolt and nut (not shown). A case cover 34, which is moved from a closed position to an open position during operation of the side airbag device 10, is connected to the case 19 by, for example, a hinge 35. Inflation gas for inflating the airbag 518 is sealed in the inside of the inflator 17. The inflator 17 has a gas discharge nozzle 20 for discharging the inflation gas into the airbag 518.

An impact sensor (not shown in the drawing) for outputting a signal when an impact exceeding a predetermined impact is applied to the body and a control circuit (not shown in the drawing) for supplying an activation signal to the side airbag device 10 in response to the signal of the impact sensor are disposed in the vehicle. The inflator 17 supplies inflation gas through the gas discharge nozzle 20 into the airbag 518 in response to the activation signal.

The airbag 518 is formed by machine sewing two sheets of fabrics (occupant side base fabric 23a and body side base fabric 23b), such as woven fabrics subjected to fire-retardant processing. The airbag 518 is inflated and deployed as indicated by the solid line in Fig. 22. The airbag 518 is folded and accommodated within the case 19, as indicated by the dashed line in Fig. 21 when the side airbag device 10 is in a standby state. During the operation of the side airbag device 10, the airbag 518 inflates as part of the seam 517 of the shoulder cover 515b and back cover 515c of the trim cover 515 breaks so as to be deployed with the rounded shape between the door 15 and the seat 11, as shown in Fig. 23.

The airbag 518 has an upper portion 38, a lower portion 39, and a main portion 37 between the upper and lower portions 38 and 39, as shown in Figs. 21, 22, and 23. When the airbag 518 is inflated, the main portion 37 is adjacent to the abdominal region of the occupant P seated in the seat 11, the upper portion 38 is adjacent to the chest region Pc, and the lower portion 39 is adjacent to the hip region Ph. When an impact exceeding a predetermined impact is applied to the side of the body of the vehicle, the hip region Ph of the occupant P is protected by the lower portion 39.

As shown in Fig. 21, a vent hole 31 is formed in the body side base fabric 23b in the upper portion 38. The vent hole 31 discharges the inflation gas within the airbag 518 continuously in predetermined amounts.

As shown in Fig. 22, an initial breaking mechanism 50 is provided at a relatively low position in the side of the seat back 13, specifically, at a height corresponding to the hip region Ph of the occupant P. The initial breaking mechanism 50 easily breaks part of the seam 517 of the seat back 13 when the inflation and deployment of the airbag 518 begins such that the airbag 518 deploys easily.

The initial breaking mechanism 50 includes in the seat back 13 a main connector body, i.e., a band-like strength fabric 51, for connecting the side plate 15c and part of the trim cover 515 corresponding to the hip region Ph of the occupant P. The strength fabric 51 is a woven fabric or unwoven fabric made from natural, recycled (semi-synthetic), or synthetic fiber, which does not stretch even when it is subjected to tension generated by the expansion of the airbag 518. Examples of desirable materials for the strength fabric 51 include polyamide fiber (6-nylon, 6,6-nylon, 4,6-nylon and the like), aromatic polyamide fiber, polyester fiber, acrylic fiber, vinylon fiber, polyolefin fiber, wool fiber, cotton fiber, hemp fiber, and collagen fiber.

As shown in Fig. 22, the front end 51a of the strength fabric 51 is sewn at the front end of the back cover 515c, i.e., in the seam margin of the seam 517. Furthermore, the rear end 51b of the strength fabric 51 is connected to a buckle 52. The rear end 51b of the strength fabric 51 is connected to the side plate 15c by the engagement of a stopper 53 formed on the buckle 52 with the side plate 15c. The rear end 51b of the strength fabric 51 is connected to the side plate 15c. The strength fabric 51 is interposed between the case cover 34 and the back cover 515c. As shown in Fig. 20, the buckle 52 is fixed to the side plate 15c, such that the strength fabric 51 intersects the lengthwise axis of the case 19.

As shown in Fig. 23, a connecting portion 24 is formed in the main portion 37 of the airbag 518 at substantially the same height as the armrest 15a of the door 15. The connecting portion 24 is formed by stitching the base fabric 23a and 23b in a V-shape such that the inner surface of the base fabrics 23a and 23b are joined. The inner surface of the base fabrics 23a and 23b in the connecting portion 24 are not separated even when the inflation gas is supplied from the inflator 17 into the airbag 518.

The inside of the airbag 518 is divided into an upper chamber 25 and a lower chamber 26 by the connecting portion 24. The upper chamber 25 and the lower chamber 26 are connected by the passages 29 and 30 formed inside the airbag 518 in the front side and the rear side of the vehicle.

As shown in Figs. 20 and 21, during the operation of the side airbag device 10 in which the gas discharge nozzle 20 is formed in the bottom part of the inflator 17, the flow of the inflation gas from the inflator 17 is deflected toward the bottom edge, i.e., the lower portion 39, of the airbag 518 by the connecting portion 24.

When the impact sensor detects an impact that exceeds a predetermined impact applied to the body of the vehicle, the side airbag device 10 activates the inflator 17 in response to an activation signal supplied from the control circuit. As indicated by arrow A in Fig. 21, the inflator 17 instantaneously discharges inflation gas from the gas discharge nozzle 20 toward the lower portion 39 of the airbag 518. The airbag 518 is inflated and deployed in the state described below by means of this discharge of the inflation gas.

First, the lower portion 39 of the airbag 518 is inflated a certain degree within the case 19. The case cover 34 is turned about the hinge 35 by the initial expansion of the airbag 518. A tension is gradually exerted on the strength fabric 51 by the turning of the case cover 34.

The stress based on the expansion of the airbag 518 is concentrated on the seam 517 of the trim cover 515. In this way, the seam 517 begins to break at the connection with the front end 51a of the strength fabric 51. The lower portion 39 of the deploying airbag 518 is deployed from the location of this break to the outside of the seat 11 (in the passenger compartment).

Since the front end 51a of the strength fabric 51 moves upward in a diagonally rear direction as the airbag 518 inflates, the break in the seam 517 advances up to a height corresponding to the abdominal region and chest region Pc of the occupant P. The inflation of the airbag 518 proceeds through the location of the enlarged break in the seam 517, and ultimately the airbag 518 is inflated in the state shown in Fig. 21. Thereafter, the inflation gas continues to be supplied from the inflator 17.

The inflation gas that has inflated the upper chamber 25 of the airbag 518 is discharged in predetermined amounts out of the airbag 518 through the vent hole 31. In this way, the pressure inside the airbag 518 is controlled so as to not exceed a predetermined pressure. Furthermore, the hardness of the airbag 518 is adjusted to decelerate and receive the occupant P intruding into the airbag 518 by means of discharge from the vent hole 31.

The side airbag device 10 of the fifth embodiment has the advantages described below.
(1) The side plate 15c of the seat back 13 is connected with the seam margin of the seam 517 of the trim cover 515 at the height of the hip region Ph of the occupant P by the strength fabric 51 made of a non-stretchable material. In this way, the part of the seam 517 corresponding to the hip region Ph of the occupant P is broken at the beginning of the inflation and deployment of the airbag 518. The lower portion 39 of the airbag 518 is rapidly deployed from the initially broken part. Furthermore, the band-like strength fabric 51 does not enlarge the seat 11.
(2) The flow of the inflation gas from the inflator 17 is deflected toward the lower chamber 26 by the connecting portion 24 provided within the airbag 518. Furthermore, since the gas discharge nozzle 20 is provided in the bottom part of the inflator 17, the inflation gas is discharged toward the lower chamber 26, and the airbag 518 begins to expand from the lower chamber 26. Since the inflation gas is rapidly supplied to the lower chamber 26, high-pressure inflation gas is concentrated in the lower chamber 26 at the start of expansion of the airbag 518, thereby concentrating a large force on the part of the seam 517 of the trim cover 515 corresponding to the hip region Ph of the occupant P, such that the seam 517 readily breaks.
(3) The flow of the inflation gas is deflected from the inflator 17 to the lower portion 39 with a relatively simple structure in which the connecting portion 24 is formed by mutually joining the pair of base fabrics 23a and 23b.
(4) The connecting portion 24 divides the inside of the airbag 518 into the upper chamber 25 and the lower chamber 26. During initial inflation, inflation gas is supplied only to the lower chamber 26 occupying only part of the capacity of the airbag 518. Therefore, the pressure of the lower chamber 26 rapidly increases compared to when the inflation gas is supplied to the entire airbag 518, the part of the trim cover 515 corresponding to the hip region Ph of the occupant P is readily broken, and the airbag 518 is quickly inflated.
(5) The inflation gas is easily deflected to the lower chamber 26 by the V-shaped connecting portion 24.

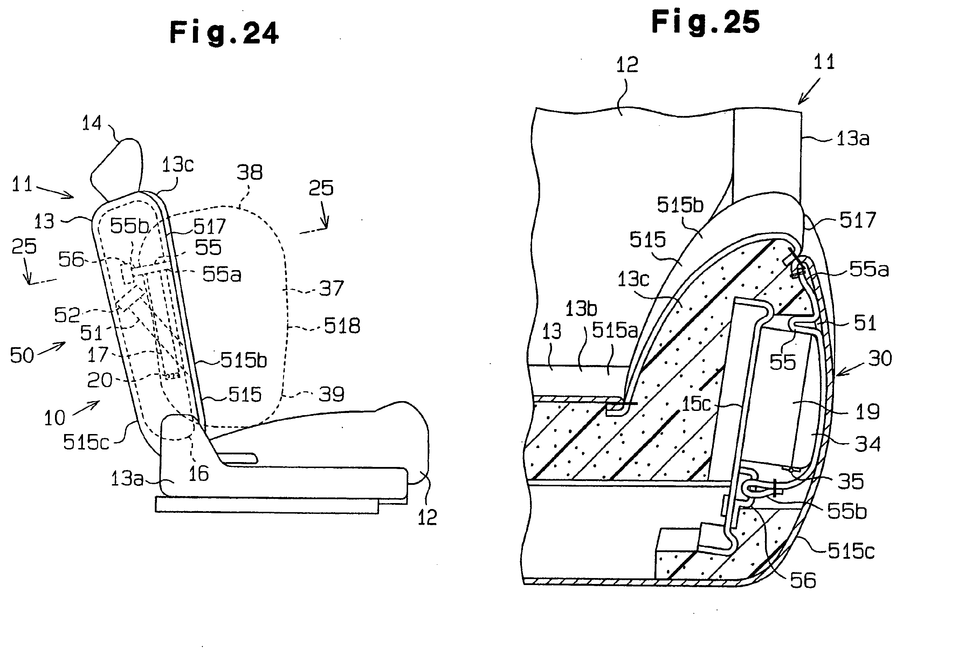

A sixth embodiment of the present invention is described below with reference to Fig. 24.

As shown in Fig. 24, the side airbag device 10 is provided with a supplemental connector, i.e., a supplemental strength fabric 55, in addition to the strength fabric 51. The supplemental strength fabric 55 is connected to the seam 517 at a height different than the height of the hip region Ph of the occupant P, e.g., at the height of the chest region Pc of the occupant P.

The supplemental strength fabric 55 is a woven fabric or unwoven fabric made from natural, recycled (semi-synthetic), or synthetic fiber, which does not stretch even when it is subjected to tension generated by the expansion of the airbag 518. Examples of desirable materials for the strength fabric 51 include polyamide fiber (6-nylon, 6,6-nylon, 4,6-nylon and the like), aromatic polyamide fiber, polyester fiber, acrylic fiber, vinylon fiber, polyolefin fiber, wool fiber, cotton fiber, hemp fiber, and collagen fiber.

The front end 55a of the supplemental strength fabric 55 is sewn to the margin of the seam 517 of the trim cover 515. The rear end 55b of the supplemental strength fabric 55 is connected to a buckle 56. The rear end 55b of the supplemental strength fabric 55 is connected to the side plate 15c by the engagement of the buckle 56 with the side plate 15c. The supplemental strength fabric 55 is arranged between the case 19 and the back cover 515c.

The side airbag device 10 of the sixth embodiment has the following advantages.
(1) The seam 517 breaks at a portion corresponding to the hip region Ph and the chest region Pc of the occupant P during initial inflation and deployment of the airbag 518. In this way, the entire airbag 518 propels from the seat 11 at an early stage, the lower portion 39 is rapidly deployed adjacent to the hip region Ph of the occupant P, and the upper portion 38 is rapidly deployed adjacent to the chest region Pc of the occupant P.

A seventh embodiment of the present invention is described below with reference to Fig. 25.

The side airbag device 10 of the seventh embodiment is provided with the strength fabric 51 and the supplemental strength fabric 55. The length of the strength fabric 51 and the supplemental strength fabric 55 are set such that the strength fabric 51 attains an inflated state before the supplemental strength fabric 55 during initial expansion of the airbag 518. Specifically, slack in the supplemental strength fabric 55 is greater than that of the strength fabric 51.

The side airbag device of the seventh embodiment provides the following advantages.
(1) During the initial inflation of the airbag 518, first the strength fabric 51 is inflated, then the supplemental strength fabric 55 is inflated. In this way, stress is focused on the seam 517 at the height of the hip region Ph of the occupant P, and this part breaks first. Then, stress is focused on the seam 517 at the height of the chest region Pc of the occupant P, and this part breaks. Therefore, the entire the inflation range of the airbag 518 in the trim cover 515 breaks at an early stage. Accordingly, the entire airbag 518 is more optimally inflated and deployed, and the occupant P is more optimally protected.

A side airbag device 10 according to an eighth embodiment of the present invention is described below.

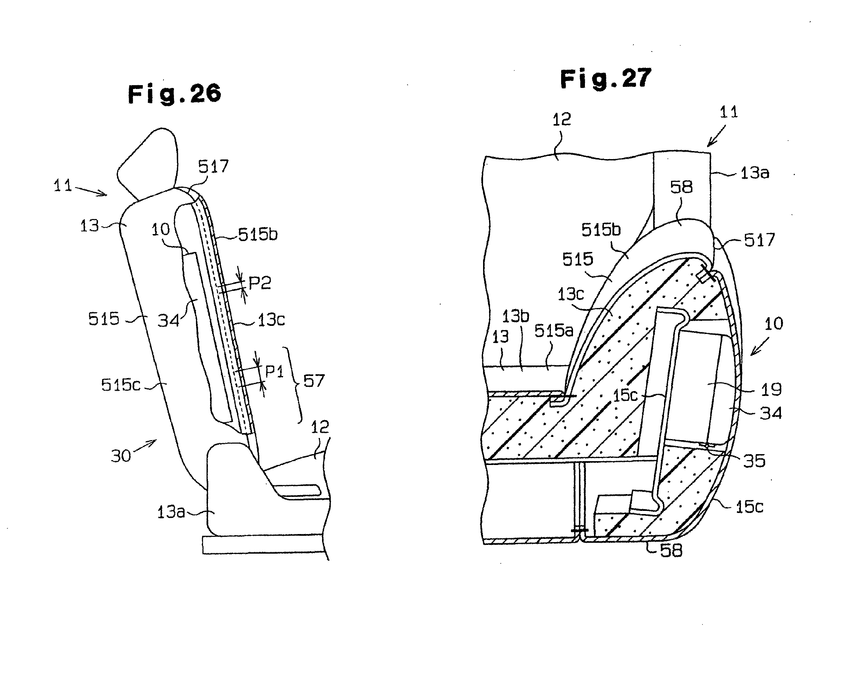

As shown in Fig. 26, the side airbag device 10 of the eighth embodiment is not provided with the strength fabric 51 and the supplemental strength fabric 55. The side airbag device 10 is alternatively provided with a low strength seam 57, i.e., an initial break mechanism, set such that the seam strength of the seam 517 at the height of the hip region Ph of the occupant P is lower than the seam strength of other parts of the seam. Specifically, the stitch pitch P1 of the low strength seam 57 is greater than the stitch pitch P2 of other parts of the seam, i.e., non-low strength seam 57 parts.

The side airbag device 10 of the eighth embodiment has the following advantages.
(1) The stitching of the low strength seam 57 is released by the stress of the initial expansion of the airbag 518, and a break starts from the seam 517 at the height of the hip region Ph of the occupant P. Therefore, the lower portion 39 of the airbag 518 can be rapidly inflated and deployed by a simple structure without providing special parts or devices.

A ninth embodiment of the present invention is described below with reference to Fig. 27.

In the ninth embodiment, the trim cover 515 (shoulder cover 515b and back cover 515c) of the part corresponding to the hip region Ph of an occupant P is formed from a nonstretchable cover material 58. Therefore, when a tension is exerted upon the trim cover 515, the tension is focused on the seam 517 at the part corresponding to the hip region Ph of the occupant P. Accordingly, the lower portion 39 of the airbag 518 can be rapidly inflated and deployed by a simple structure without providing special parts or devices.

The fifth through ninth embodiments may be modified as described below.

In the sixth and seventh embodiments, the front end 55a of the supplemental strength fabric 55 also may be a part of the trim cover 515 other than the part corresponding to the chest region Pc of the occupant P, for example, a part corresponding to the height of the abdominal region of the occupant P. Furthermore, the front end 55a of the supplemental strength fabric 55 may be provided, for example, at the front side of the vehicle on the shoulder portion 13c of the seat back 13. A plurality of supplemental strength fabrics 55 also may be provided.

In the fifth through seventh embodiments, the strength fabric 51 and the supplemental strength fabric 55 are not limited to a band, and may be, for example, a string or the like. The strength fabrics 51 and 55 also may be formed using woven fabric and unwoven fabric made of materials other than the previously listed materials.

The fabric forming the main connection body and supplemental connection body is not limited as long as it does not stretch when acted upon by a pulling force generated by the expansion of the airbag 518, and the material of these connection bodies may be optionally selected, for example, metal, paper and the like, as long as it resists the pulling force generated during the expansion of the airbag 518.

In the fifth through seventh embodiments, at least one among the buckle 52 provided on the rear end 51b of the strength fabric 51 and the buckle 56 provided on the rear end 55b of the supplemental strength fabric 55 may be connected to a fixed body attached to the case cover 34, or case 19, or exclusive of these to the frame of the seat back 13.

In the fifth through seventh embodiments, at least one among the strength fabric 51 and the supplemental strength fabric 55 may be provided at a position on the inner side of the vehicle relative to the deployed airbag 518, for example, so as to connect the margin of the seam 517 at the shoulder cover 515b of the trim cover 515, and part of the side plate 15c on the front side of the vehicle. Furthermore, at least one among the strength fabric 51 and the supplemental strength fabric 55 may be provided at positions both on the inner side and outer side of the vehicle relative to the deployed airbag 518.

Furthermore, the inner side and the outer side of the fabric may be integrally formed. In such a case, the frame of the seat back 13 and the trim cover 515 may be connected without using a buckle. That is, for example, one end of the strength fabric may be stitched to the margin of the seam 517 on the shoulder cover 515b, and the other end may be stitched to the margin of the seam 517 on the back cover 515c, such that the center part of the strength fabric is hooked to frame of the seat back 13 or to a solid body attached to the frame.

In the fifth through seventh embodiments, the strength fabrics 51 and 55 may be made using, for example, a two-layer fabric so as to integrally form part of the strength fabric 51 and 55. A plurality of strength fabrics 51 and 55 may be connected to the same buckle.

As an alternative to stitching the front end 51a of the strength fabric 51 and the front end 55a of the supplemental strength fabric 55 to the margin of the seam 517, these front ends may be connected using, for example, an optional method of adhesion, fusion bond, binding and the like.

The back cover 515c also may be, for example, elongated and band-like, such that the back cover 515c is integrated with the strength fabric 51 and/or the supplemental strength fabric 55. In this case, it is desirable that the band-like part of the trim cover 515 be made of a nonstretchable cover material.

The low strength seam 57 of the eighth embodiment also may be formed by stitching the trim cover 515 using a relatively low tension strength thread. Furthermore, if the trim cover 515 is stitched using weak thread at a coarse pitch, the airbag 518 will readily expand from the low strength seam 57.

In the ninth embodiment, the nonstretchable cover material 58 also may be provided at a part of the shoulder cover 515b of the trim cover 515 corresponding to the height of the hip region Ph of the occupant P, and a part of the back cover 515c corresponding to the height of the hip region Ph of the occupant P on the front side of the vehicle.

A plurality of types of initial breaking mechanisms may be combined. For example, the strength fabric 51 and the low strength seam 57 may be optionally combined with the nonstretchable cover material 58. In this case, the lower portion 39 of the airbag 518 is inflated and deployed even more rapidly.

Instead of using the connecting portion 24, for example, a tube body which is bendable with the airbag 518 may be disposed within the airbag 518. The tube body may be formed, for example, of a fabric material identical to that of the base fabrics 23a and 23b. In this case, the inflation gas is supplied to the lower chamber 26 of the airbag 518 through the inside of the tube body.

The part that begins to break first during the expansion and deployment of the airbag 518 is not limited to the seam 517 of the shoulder cover 515b and the back cover 515c, and is optional. For example, a place other than the seam 517 also may break first.

The case cover 34 may be omitted. In this case, the airbag 518 accommodated in the case 19 may be covered by the trim cover 515 of the seat back 13.

The case 19 of the side airbag device 10 also may be eliminated. In this case, the inflator 17 may be mounted on part of the frame of the seat 11, or on a cushion member inside the seat 11.

The trim cover 515 may also be formed integrally with a cover covering part of or the entire seating portion 12 of the seat 11.

If the seat 11 is provided with at least a seating portion 12 and a seat back 13, it may also be provided with, for example, an armrest.

A side airbag device 10 of a tenth embodiment is described below.

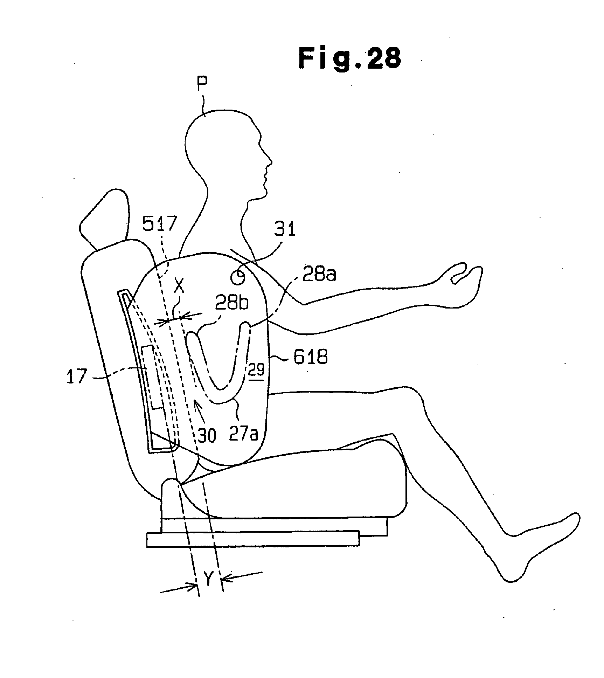

As shown in Fig. 28, the side airbag device 10 includes an airbag 618 having a U-shaped connecting portion 24 and an inflator 17 fixed to the side plate 15c forming part of the frame of the seat 11. The connecting portion 24 includes a horizontal section 27 and front and rear vertical sections 28a and 28b respectively extending in a vertical direction from the two ends of the horizontal section 27. The upper portions of the front vertical section 28a and the rear vertical section 28b define the lower chamber 26, and the lower portion of the horizontal section 27 defines the lower chamber 26. When the airbag 618 is inflated, the rear vertical section 28b is disposed so as to face the inflator 17, a rear passage 30 is defined between the rear vertical section 28b and the inflator 17, and a front passage 29 is defined between the front vertical section 28a and the front edge of the airbag 618.

Specifically, when the side airbag device 10 operates, the seam 517 of the shoulder cover 515b and the back cover 151c is broken by the inflation of the airbag 618. The airbag 618 is inflated by the breaking of the seam 517. When the airbag 618 is completely inflated, the rear vertical section 28b of the connecting portion 24 is disposed to the front of the seat back 13, specifically to the front of the seam 517. However, the distance between the rearmost end of the rear vertical section 28b and the inflator 17 is the total of the distance between the seam 517 and the inflator 17 and the distance between the rearmost end of the rear vertical section 28b and the inflator 17. The distance Y between the seam 517 and the inflator 17 is, for example, 135 mm. It is desirable that the distance X between the rearmost end of the rear vertical section 28b and the inflator 17 be 25 mm or greater.

The following advantages are obtained by having a large distance between the connecting portion 24 and the inflator 17.
(1) With the airbag 618 in a folded state, inflation gas is discharged from the inflator 17. The discharged inflation gas impinges the connecting portion 24 and first inflates the part (rear passage 30) between the inflator 17 and the connecting portion 24. Since the connecting portion 24 is formed relatively forward of the airbag 618, the connecting portion 24 is pressed forward by the inflation gas. In this way, the seam 517 is easily broken by the inflation of the airbag 618 at the start of operation of the side airbag device 10. Accordingly, the airbag 618 completes deployment at an early stage.
(2) Due to the relatively large rear passage 30, the inflation gas flows rapidly within the airbag 618 after the seam 517 has broken. As a result, the deployment of the airbag 618 is completed at an early stage.

The side airbag device 10 of an eleventh embodiment of the present invention is described below.

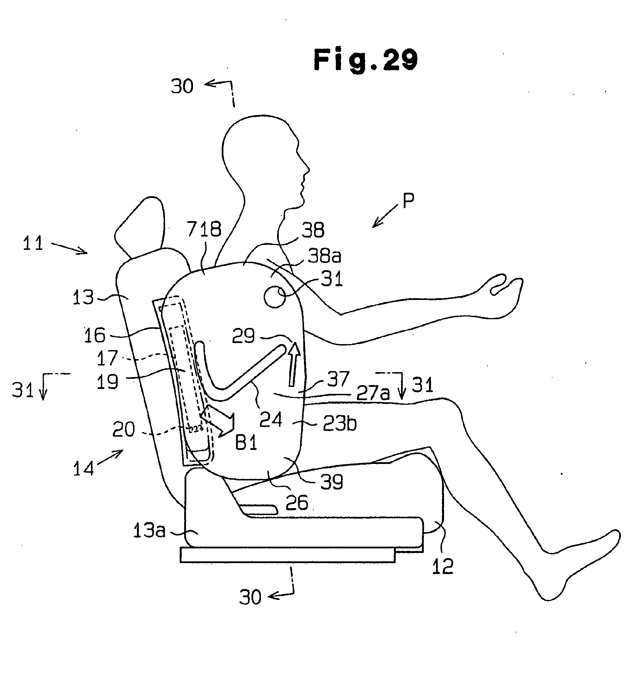

An airbag 718 is folded and accommodated in the case 19, as indicated by the dashed line in Fig. 29. The deployed airbag 718 has an upper portion 38, a lower portion 39, and a main portion 37 between the upper portion 38 and the lower portion 39. When the airbag 718 is deployed, the main portion 37 is adjacent to the abdominal region of the occupant P sitting in the seat 11, the upper portion 38 is adjacent to the chest region Pc, and the lower portion 39 is adjacent to the hip region Ph.

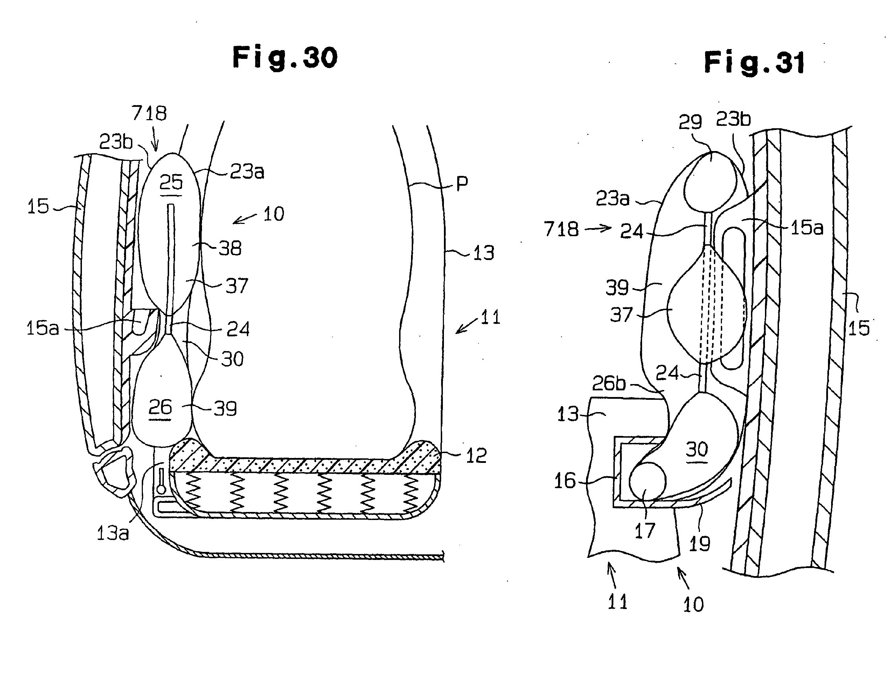

The airbag 718 has a flow restricting means, i.e., a connecting portion 24, at the height of the armrest 15a of the door 15 (refer to Figs. 30 and 31). The connecting portion 24 is formed by V-shaped stitching of the two layers of the base fabrics 23a and 23b. The two layers of the base fabrics 23a and 23b are mutually inseparable in the connecting portion 24 even under inflation of the airbag 718. The connecting portion 24 restricts the flow of the inflation gas from the inflator 17 toward the lower portion 39 and divides the inside of the airbag 718 into an upper chamber 25 and a lower chamber 26.

The airbag 718 has a front passage 29 connecting the upper chamber 25 and the lower chamber 26 at the front end of the connecting portion 24. A vent hole 31 is formed in the upper portion 38 of the airbag 718, specifically in the front part 38a of the occupant side base fabric 23a. The inflation gas supplied from the inflator 17 into the airbag 718 is continuously discharged from,the vent hole 31 in predetermined amounts.

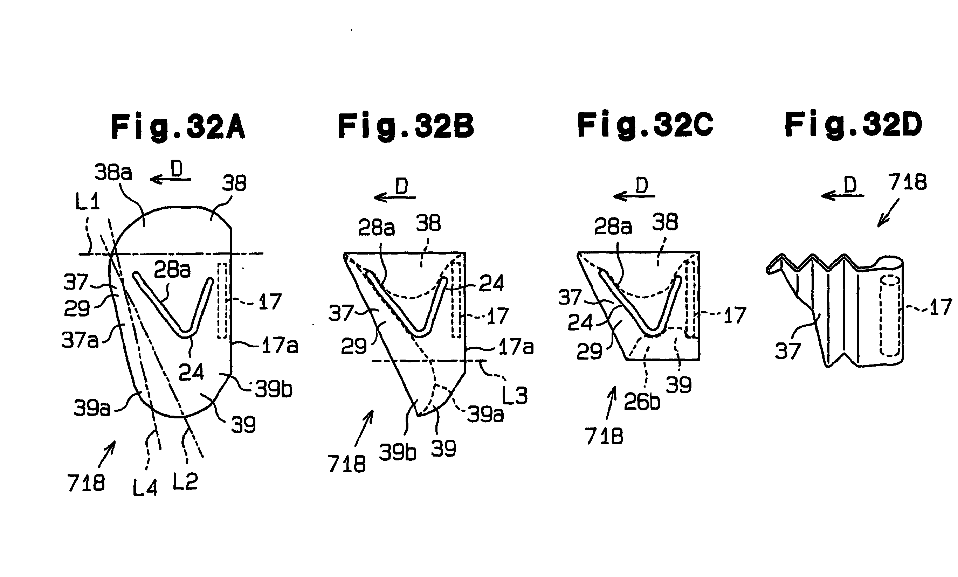

The method of folding the airbag 718 is described below with reference to Figs. 32A through 32D.

The inflator 17 is disposed in the inside of the airbag 718 beforehand. First, the upper portion 38 is folded back at the broken line L1 parallel to the inflation direction D of the airbag 718 (top part folding process). It is desirable that the upper portion 38 be folded back so as to be accommodated inside the main portion 37 (front passage 29). The folded upper portion 38 is arranged between the occupant side base fabric 23a and the body side base fabric 23b of the main portion 37.

Then, the front part 37a of the main portion 37 and the front part 39a of the lower portion 39 are folded back toward the inflator 17 at the broken line L2 diagonally intersecting the inflation direction D of the airbag 718 (front part folding process). In the front part folding process, it is desirable that the front part 37a of the main portion 37 be folded substantially along the front part 24a of the connecting portion 24, such that the front parts 37a and 26a are accommodated inside the airbag 718. After folding, the front parts 37a and 26a are interposed between the occupant side base fabric 23a and the body side base fabric 23b.

Thereafter, as shown in Figs. 32B through 32C, the rear part 26b of the lower portion 39 is folded back to the main portion 37 side at the broken line L3 parallel to the inflation line D of the airbag 718 (bottom part folding process). After folding, the lower portion 39 is interposed between the occupant side base fabric 23a and the body side base fabric 23b of the main portion 37. It is desirable that the rear part 26b and the front part 39a of the lower portion 39 are accommodated inside the rear part 24b of the main portion 37. After folding, a width is arranged between the top end and the bottom end of the airbag 718 so that the top end and the bottom end of the airbag 718 do not protrude extensively from the top end and the bottom end of the inflator 17. Finally, as shown in Fig. 32D, the airbag 718 is folded in accordion-like folds substantially parallel with the longitudinal axis of the inflator 17.

When an impact is detected, the side airbag device 10 having the structure described above discharges inflation gas sealed in the inflator 17 from the gas discharge nozzle 20 toward the lower portion 39 of the airbag 718. The airbag 718 is inflated and deployed by means of the discharge of the inflation gas.

Specifically, the airbag 718 folded as shown in Fig. 32D is deployed in a trapezoidal shape as shown in Fig. 32C. Then, as shown in Fig. 32B, the rear part 26b of the lower portion 39 is inflated downward from inside the main portion 37, and the front part 39a of the lower portion 39 is inflated diagonally downward from inside the airbag 718. The front part 37a of the main portion 37 is also inflated diagonally downward from inside the airbag 718 as the front part 39a of the lower portion 39 inflates. Finally, as shown in Fig. 32A, the upper portion 38 is inflated upward from inside the main portion 37.

Thus, as the airbag 718 inflates, the supply of inflation gas from the inflator 17 continues. The inflation gas that reaches the upper portion 38 of the airbag 718 is discharged from the vent hole 31 in predetermined amounts. In this way, the pressure inside the airbag 718 is suppressed from excessively increasing beyond a predetermined pressure. Furthermore, the hardness of the airbag 718 is adjusted such that the airbag 718 decelerates and stops the intruding occupant P by gradually discharging the inflation gas inside the airbag 718 through the vent hole 31. In this way, the inflation of the airbag 718 is completed.

Accordingly, the side airbag device 10 of the eleventh embodiment has the following advantages.
(1) In the front part folding process, the front part 37a of the main portion 37 and the front part 39a of the lower portion 39 are folded back to the back edge of the airbag 718. The rear part 26b of the lower portion 39 is folded back to the main portion 37 side. The airbag 718 folded in this way is deployed in the sequence of the rear part 24b of the main portion 37, rear part 26b of the lower portion 39, front part 39a of the lower portion 39, and front part 37a of the main portion 37. Accordingly, since the lower portion 39 of the airbag 718 begins inflation at an early stage, the inflation and deployment of the lower portion 39 is completed more quickly.
(2) In the front part folding process, the front part 37a of the main portion 37 and the front part 39a of the lower portion 39 are folded back so as to be accommodated inside the airbag 718. In the bottom part folding process, the rear part 26b of the lower portion 39 is folded back so as to be accommodated inside the rear part 24b of the main portion 37. In this way, the rear part 26b and the front part 39a of the lower portion 39 are deployed downward from inside the main portion 37 during deployment. Therefore, the inflation and deployment of the lower portion 39 of the airbag 718 is rapidly completed even when the space between the seat 11 and the vehicle door 15 of the vehicle is relatively small.
(3) The inflation gas from the inflator 17 is discharged toward the lower portion 39 inside the airbag 718. The flow of the inflation gas from the inflator 17 is restricted by the connecting portion 24 toward the lower portion 39. Therefore, the inflation gas from the inflator 17 is rapidly supplied to the lower portion 39. In this way, there is a rapid increase in the pressure acting on the inner side of the part of the pair of base fabrics 23a and 23b corresponding to the lower portion 39, such that there is rapid deployment of the lower portion 39 downward during the initial deployment of the airbag 718. As a result, the inflation and deployment of the lower portion 39 is rapidly completed even though the airbag 718 has the upper portion 38 and an overall large capacity.
(4) The connecting portion 24 is formed by stitching the two layers of the base fabrics 23a and 23b. Therefore, the flow of the inflation gas from the inflator 17 is simply directed to the lower chamber 26 without using separate parts. Furthermore, since the connecting portion 24 is not difficult to fold back into the airbag 718, the airbag 718 'is folded compactly.
(5) The connecting portion 24 vertically divides the inside of the airbag 718. Therefore, during initial inflation of the airbag 718, the inflation gas is mainly supplied to the lower chamber 26 and does not easily flow into the upper chamber 25. Since the capacity of the lower chamber 26 is small compared to the entire airbag 718, the pressure of the lower chamber 26 rapidly increases during the initial operation of the side airbag device 10. Accordingly, the inflation of the lower chamber 26 is completed more quickly.
(6) Since the connecting portion 24 is formed in a V-shape, the flow of the inflation gas is easily restricted so that it is not directed along the connecting portion 24 toward the lower chamber 26.
(7) The lower chamber 26 is connected to the upper chamber 25 by the front passage 29 formed in the front part 37a of the main portion 37. Since the front passage 29 accommodates the front part 37a of the folded main portion 37 when the airbag 718 is folded, the effective passage cross sectional area of the front passage 29 is small. Therefore, the inflation of the lower chamber 26 is completed at an earlier stage because the flow of the inflation gas into the upper chamber 25 from the lower chamber 26 is more regulated during the initial deployment of the airbag 718.

The eleventh embodiment may be modified as described below.

As an alternative to mounting the inflator 17 to the airbag 718 before folding the airbag 718, the inflator 17 may be mounted to the airbag 718 after folding the airbag 718.

When the inside of the airbag 718 is vertical, the top' part folding process may be performed after the front part folding process or the bottom part folding process.

In the front part folding process, the front part 37a of the main portion 37 and the front part 39a of the lower portion 39 of the airbag 718 are folded back toward the back edge of the airbag 718 along the front part 24a of the connecting portion 24. However, in the front part folding process, the front part 37a of the main portion 37 and the front part 39a of the lower portion 39 need not necessarily be folded back along the front part 24a. In the front part folding process, the front part 37a of the main portion 37 and the front part 39a of the lower portion 39 may be, for example, folded back to the back edge of the airbag 718 at the dashed line L4 so as to cross the inflation direction D of the airbag 718 shown in Fig. 32A. Essentially, the rear part 26b of the lower portion 39 may be folded directly before the accordion-like folding process of the airbag 718.

The folded parts of the airbag 718 need not be accommodated inside the airbag 718. For example, at least one of the folded parts may be folded outside the airbag 718. When the space between the door and the seat 11 is relatively small, it is desirable that at least one part of the lower portion 39 of the airbag 718 is folded so as to be accommodated inside the main portion 37.

The upper portion 38 of the airbag 718 may be eliminated. In this case, when folding the airbag 718, the top part folding process is eliminated. Also in this case, it is desirable that the vent hole 31 be provided, for example, in the front part of the body side base fabric 23b of the main portion 37.

A side airbag device 10 according to a twelfth embodiment of the present invention is described below.

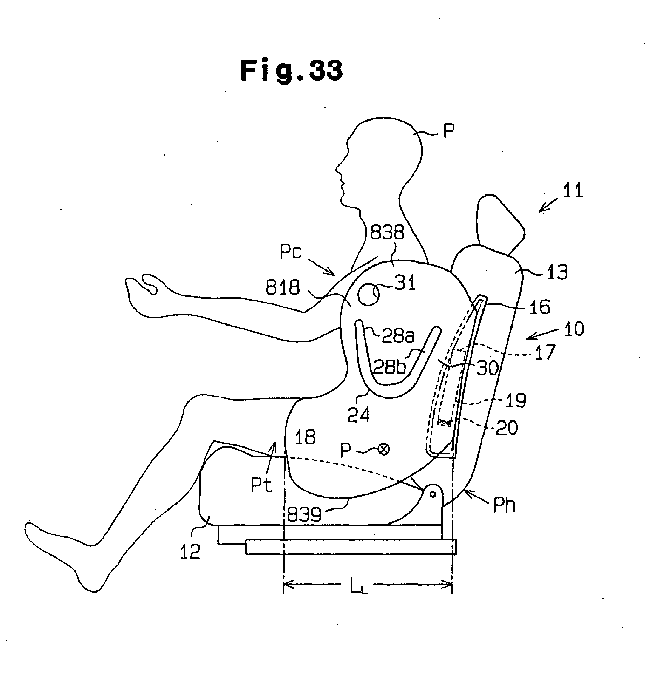

In general, the inflation of the airbag moves the upper body (chest region Pc) of the occupant P relatively easily in a direction away from the body 15. However, the hip region Ph of the occupant P moves with relative difficulty due to friction with the seat surface 15b. Therefore, as shown in Fig. 33, an airbag 818 of the twelfth embodiment has a lower portion 839 that expands from the hip region Ph across the thigh region Pt of the occupant P sitting in the seat 11. A part of the lower portion 839 is disposed on the side of the seating portion 12 of the seat 11.

In this embodiment, the inflator 17 is disposed at a position so that the center of the inflator 17 is only 250 mm above the position P (hip point) of the hip region Ph of the occupant P. At the height of the hip point P, it is desirable that the distance L_{L} between the front end of the lower portion 839 and the center of the inflator 17 be in the range of 350 mm to 500 mm. When the distance L_{L} is within this range, the lower portion 839 is inflated at a desirable speed, and the lower portion 839 presses against the hip region Ph and the thigh region Pt of the occupant P with a desirable strength. In the twelfth embodiment, the distance L_{L} is 350 mm.

The side airbag device 10 of the twelfth embodiment has the following advantages.
(1) In the twelfth embodiment, the airbag 818 has a lower portion 839 formed so as to correspond to the hip region Ph and the thigh region Pt of the occupant P. Therefore, the hip region Ph and the thigh region Pt of the occupant P are reliably moved in a direction away from the body 15 by the expansion of the lower portion 839.. Therefore, the occupant P is optimally protected.
(2) The hip region Ph and the thigh region Pt of the occupant P are relatively strongly pushed in a direction away from the body 15 by the inflation of the lower portion 839 of the airbag 818, and the chest region Pc is relatively weakly pushed by the upper portion 838. In this way, the chest region Pc, and hip region Ph of the occupant P are reliably moved toward the center of the vehicle. Therefore, the occupant P is optimally protected without injury to the chest region Pc.

A side airbag device 10 according to a thirteenth embodiment of the present invention is described below.

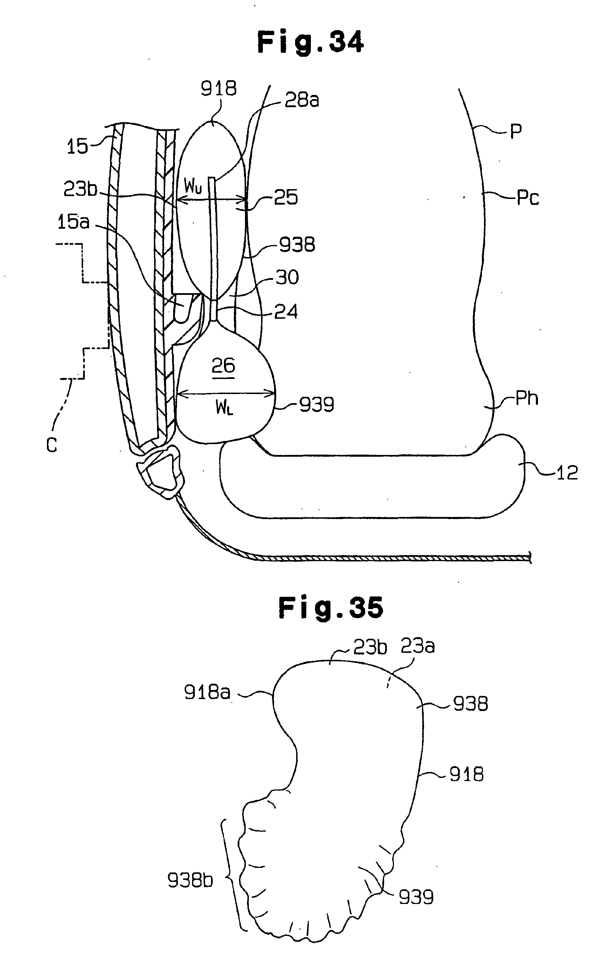

As shown in Fig. 34, an airbag 918 has a lower portion 939 that is relatively thick when inflated. The thickness W_{L} of the lower portion 939 is greater than the thickness W_{U} of the upper portion 938. It is desirable that the thickness W_{L} of the lower portion 939 be in the range of 60 mm to 150 mm. When the thickness W_{L} is within this range, the lower portion 939 is inflated at a desirable speed, and the hip region Ph of the occupant P is pressed with a desirable strength. In the thirteenth embodiment, the thickness W_{U} of the upper portion 938 is 130 mm, and the thickness W_{L} of the lower portion 939 is 200 mm.

Fig. 35 is a side view of the airbag 918 before inflation is completed. The base fabrics 23a and 23b are stitched so that the lower portion 939 is billowed. In this way, the lower portion 939 expands to a relatively thick shape. The airbag 918 may be manufactured, for example, by providing a surplus of lower portion 939 by forming a tuck 938b in the seam 918a of the base fabrics 23a and 23b at a part of the seam corresponding to the lower portion 939.

The side airbag device 10 of the thirteenth embodiment provides the following advantages.
(1) In the thirteenth embodiment, the airbag 918 has a lower portion 939 formed so as to correspond to the hip region Ph of the occupant P that is relatively difficult to move. Since the lower portion 939 is relatively thick when inflated, the hip region Ph of the occupant P is greatly moved in a direction away from the body 15. Therefore, the occupant P is optimally protected.
(2) The hip region Ph of the occupant P is pushed relatively strongly in a direction away from the body 15 by the inflation of the lower portion 939 of the airbag 918, and the chest region Pc is relatively weakly pushed by the upper portion 938. In this way, the chest region Pc and the hip region Ph of the occupant is optimally pushed without injury.
(3) Since the upper portion 938 of the airbag 918 is inflated to the degree of being capable of moving the chest region Pc of the occupant P at the moment the lower portion 939 of the airbag 918 is inflated to the degree of being capable of moving the hip region Ph of the occupant P, the airbag 918 can simultaneously move the chest region Pc and the hip region Ph of the occupant P away from the body 15.

## Claims

1. A side airbag device comprising:
an inflator for generating an inflation gas when an impact exceeding a predetermined impact is exerted on the side surface of a body;
an airbag that is inflated and deployed by the inflation gas;
a partitioning means provided in the airbag for dividing the inside of the airbag into at least an upper chamber and a lower chamber;
a flow restricting means provided in the airbag for distributing the flow of the inflation gas to the upper chamber and the lower chamber.

2. The side airbag device of claim 1, wherein the side airbag device is mounted to the seat back of a seat disposed in a passenger compartment.

3. The side airbag device of claim 2, wherein the airbag is accommodated in the seat back, and deployment of the airbag is permitted by breaking part of the seat back.

4. The side airbag device of claim 3, wherein a means for facilitating the breaking of the seat is provided in part of the seat back that accommodates the lower chamber of the airbag.

5. The side airbag device of claim 4, wherein the break facilitating means is formed from a relatively nonstretchable material.

6. The side airbag device of claim 1, wherein the partitioning means defines at least a rear passage connecting the upper chamber and the lower chamber in the rear part of the airbag, and part of the partitioning means also operates as the flow restricting means.

7. The side airbag device of claim 6, wherein the rear end of the flow restricting means is disposed in front of the seat back, and part of the rear passage is disposed in front of the seat back when the airbag is deployed.

8. The side airbag of claim 6, wherein the flow restricting means has a part extending vertically.

9. The side airbag device of claim 6, wherein the flow restricting means distributes more inflation gas to the lower chamber than to the upper chamber.

10. The airbag device of claim 9, wherein the airbag is provided with a means for maintaining pressure of the upper chamber below a predetermined pressure.

11. The side airbag device of claim 10, wherein the means for maintaining pressure is a vent mechanism.

12. The side airbag device of claim 11, wherein the vent mechanism includes a variable vent mechanism.

13. The side airbag device of claim 10, further comprising a thickness restricting means for restricting the thickness of the airbag, wherein the thickness restricting means releases thickness restriction when the pressure of the airbag reaches a predetermined pressure, and the thickness restricting means also functions as the means for maintaining pressure.

14. The side airbag device of claim 9, wherein the aperture cross sectional area at the lower end of the rear passage is greater than the aperture cross sectional area at the upper end.

15. The side airbag device of claim 9, wherein the partitioning means includes a front portion disposed in front of the flow restricting means.

16. The side airbag device of claim 15, wherein the front portion is connected to the flow restricting means.

17. The side airbag device of claim 15, wherein the airbag has a front passage connecting the upper chamber and the lower chamber in front of the front portion.

18. The side airbag device of claim 17, wherein the front portion is formed so as to extend vertically in the front part of the airbag.

19. The side airbag device of claim 17, wherein the partitioning means is formed in a U-shape, V-shape, H-shape, W-shape, or horizontal T-shape.

20. The side airbag device of claim 15, wherein the lower chamber has a relatively flat bottom portion.

21. The side airbag device of claim 15, wherein the airbag in the deployed state has a lower portion corresponding to a hip region of an occupant and a main portion adjacent to the abdominal region of the occupant, and when the side airbag device is in a standby state, the front part of the main portion and the front part of the lower portion are folded back to the front end of the partitioning means, and the lower portion is folded back to the lower end of the partitioning means.

22. The side airbag device of claim 15, wherein the partitioning means defines the upper chamber, the lower chamber, and a main portion between the upper chamber and the lower chamber, and the thickness of the airbag at the main portion is less than the thickness of the upper chamber and the lower chamber.

23. The side airbag device of claim 22, wherein the thickness of the lower chamber is greater than that of the upper chamber.

24. The side airbag device of claim 22, wherein the main portion is disposed at the height of an armrest on the vehicle door when the airbag is inflated.

25. The side airbag device of claim 6, wherein the thickness restricting means is a tether or a connecting portion connecting inner surfaces of the airbag.

26. The side airbag device of claim 6, wherein the airbag includes an outer bag and an inner bag, which is disposed within the outer bag.

27. The side airbag device of claim 26, wherein the flow restricting means has a shape that is substantially the same as the lower chamber, and has a connecting hole so that the gas flows into the upper chamber.

28. The side airbag device of claim 1, wherein the upper chamber is disposed at the height of the chest of the occupant, and the lower chamber is disposed at the height of the abdomen of the occupant when the airbag is inflated.

29. The side airbag device of claim 28, wherein at least part of the lower chamber is disposed on a side surface of the seating portion of the seat when the airbag is inflated.

30. The side airbag device of claim 28, wherein at least part of the lower chamber is disposed beside a thigh of the occupant when the airbag is inflated.
